# EUROPEAN PATENT SPECIFICATION

(11) **EP 0 308 965 B1**
(45) Date of publication and mention of the grant of the patent: **13.03.1996**
(21) Application number: 88115705.1
(22) Date of filing: 23.09.1988
(51) Int. Cl.: G06T 11/40

(54) **Method of and apparatus for obtaining image data used for filling inner or outer region of graphic figure**
Verfahren und Gerät zur Gewinnung von Bilddaten zur Ausfüllung des Innen-oder Aussengebietes einer graphischen Figur
Méthode et appareil pour obtenir des données d'image pour remplir une région intérieure ou extérieure d'une figure graphique

(30) Priority: 25.09.1987 JP 241398/87
(43) Date of publication of application: 29.03.1989
(73) Proprietor: Dainippon Screen Mfg. Co., Ltd., Kamikyo-ku Kyoto 602 (JP)
(72) Inventor: Kishimoto, Katsumi Dainippon Screen Mfg. Co., Ltd., Horikawa Dori Kamikyo-ku Kyoto (JP); Shimazu, Shigeaki Dainippon Screen Mfg. Co., Ltd., Horikawa Dori Kamikyo-ku Kyoto (JP)
(74) Representative: Goddar, Heinz J., Dr.

(56) References cited:
- FR-A- 2 590 702
- IEEE COMPUTER GRAPHICS AND APPLICATIONS, vol. 6, no. 7, July 1986, pages 61-70, New York, US; R.D. HERSCH: "Descriptive contour fill of partly degenerated shapes"

## Description

The present invention relates to a method and an apparatus for inputting graphic data provided in the form of a set of segments, to convert the same into image data used for filling the inner or outer region of a graphic figure whose contour line is expressed by the segments, with the features of a first part of claim 1 and 11, resp.

Such method and apparatus are known from IEEE COMPUTER GRAPHICS AND APPLICATIONS, vol. 6, no. 7, July 1986, pages 61-70, New York, US; R.D. HERSCH: "Descriptive contour fill of partly degenerated shapes".

In the field of process printing, inner or outer region of a graphic figure is often filled with a monochromatic color to produce a process cut mask or a pattern mask used for making a printed circuit board.

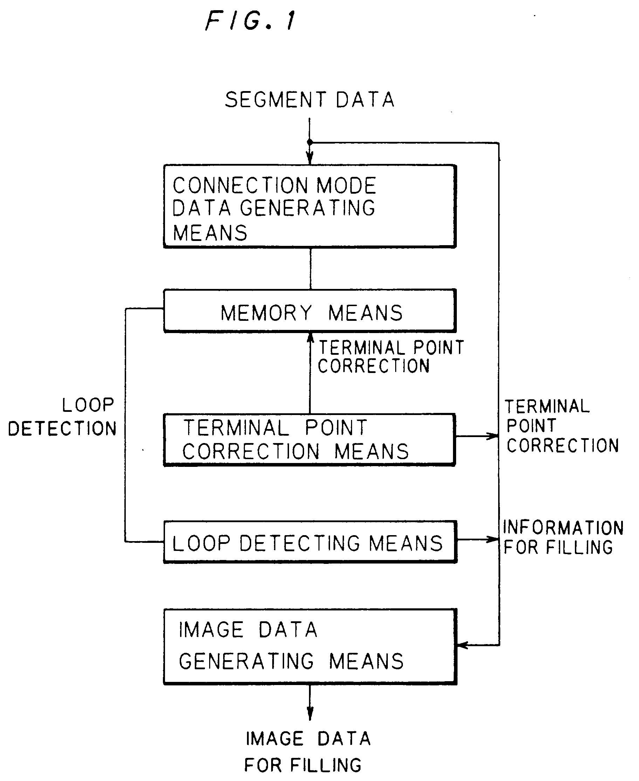

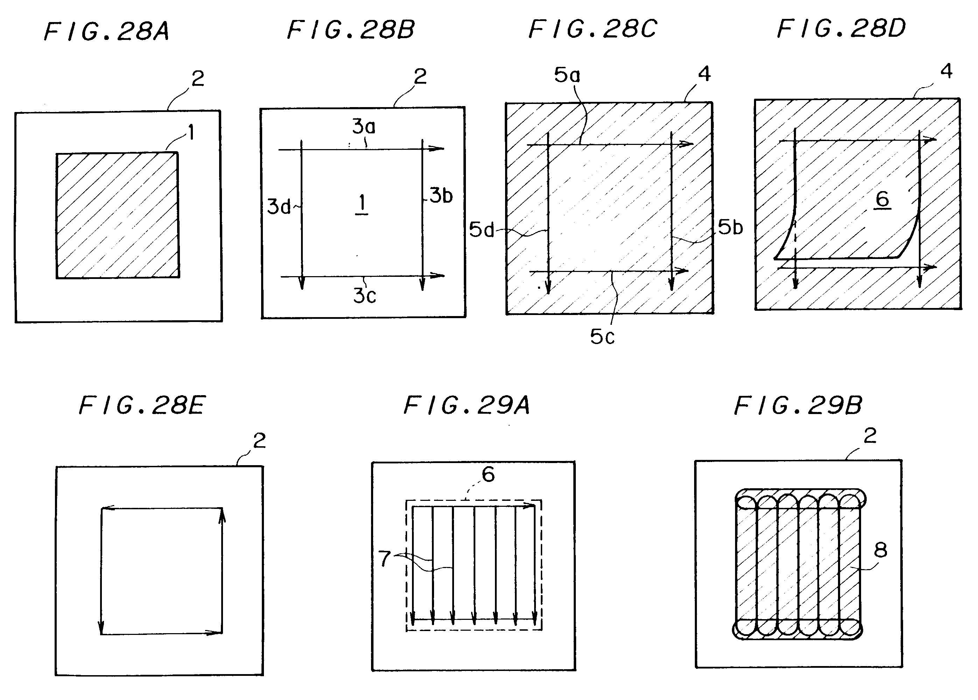

One of the conventional techniques for conducting the filling process employs a cutting machine. For example, consider a mask film 2 shown in Fig. 28A of the accompanying drawings, in which the inner region of the graphic figure 1 should be filled with a monochromatic color. In manufacturing the mask film 2, data expressing segments 3a-3d (Fig. 28BV) defining the contour line of the graphic figure 1 are prepared by means of a computer aided design technique (CAD). In Fig. 28B, the segments 3a-3d are illustrated as vectors in order to indicate the respective directions of the segments 3a-3d. The data expressing the segments 3a-3d are then delivered to a cutting machine (not shown). The cutting machine is operable to automatically cut a peel-off film 4 shown in Fig. 28C to form slits 5a-5d thereon corresponding to the segments 3a-3d.

A part of the peel-off film 4 corresponding to the inner region 6 (Fig. 28D) surrounded by the slits 5a-5d is then manually taken off, to obtain a cut mask film in which only the inner region 6 is transparent. The cut mask film is inversely printed on another film through a contact printing process, to obtain the mask film 2 (Fig. 28A) in which only the inner region of the graphic figure 1 is opaque.

In another conventional technique, a photoplotter is employed. For manufacturing the mask film 2 with this technique, graphic data expressing the graphic figure 1 are prepared by means of CAD, similarly to the first conventional technique. However, the graphic data are not identical to those in the first technique, in that they express a set of segments 7 (Fig. 29A) filling the inner region 6 rather than the segments 3a-3d defining the contour line. The graphic data expressing the segments 7a are then delivered to the photoplotter (not shown).

The photoplotter scans the surface of a photosensitive film with a light beam along the segments 7 while controlling the light beam so that it is in ON state on the segments 7 and in OFF state on the other region, whereby the photosensitive film 2 shown in Fig. 29B is exposed along the trace 8 of the exposure light beam. The exposed photosensitive film 2 is developed, to obtain the desired film 2 of Fig. 28A having the filled region.

The first conventional technique employing the cutting machine has an advantage in that the graphical data can be easily prepared, since it requires only the data expressing the segments 3a-3d which define the contour line of the graphical figure 1. The segments 3a-3d may be crossed without terminating at a common point, since the respective parts of the slits 5a-5d extending over the other slits do not substantially hinder the opaque character of the outer region in the film 4. However, the technique has a disadvantage in that an operator must be skilled in the manual operation of taking off the region 6 of the peel-off film 4. Further, the efficiency of the manual operation is low, and the desired film cannot be easily obtained.

On the other hand, the second conventional technique employed the photoplotter does not require a manual operation, and the desired film 2 can be obtained automatically. However, since the diameter of the exposure beam spot is small, a long time is required to fill the inner region of a graphic figure which has relatively wide area, as compared with the first conventional technique, and a part between adjacent segments is sometimes left unfilled even after the scanning with the exposure beam is completed. Further, a long time is required also in preparation of the graphic data with CAD.

Under the circumstances, it is desirable to develop a system in which graphic data is prepared through CAD or the like only for a contour line, and a filling operation is automatically conducted at a high speed. The desirable system may be constructed with a laser plotter in which an exposure scanning with a laser beam is controlled according to run length data. For obtaining the run length data, graphic data must be prepared to include information with respect to a contour line which can be drawn with a single stroke, as shown in Fig. 28E, and other information indicating whether the inner region of the contour line is to be filled or to be left unfilled. A contour line which can be drawn with a single stroke is hereinafter referred as "single stroke contour line".

Although such graphic data can be prepared through CAD dedicated to the laser plotter, it is desired to obtain the graphic data from graphic data prepared for the cutting machine. However, a contour line expressed by the graphic data prepared for the cutting machine is not always a single stroke contour line. Therefore, when the graphic data for the cutting machine is employed for controlling the laser plotter, it is necessary to distinguish the inner region from the outer region of the graphic figure 1 on the basis of the graphic data indicating the segments 3a-3d of Fig. 28B which imperfectly express the contour line. The distinguishing process will be a complicated process, since graphic figures have many variations. Thus, the desired system will not be obtained unless a technique is developed in which imperfection in segment connection is detected and a single stroke contour line is reproduced at high efficiency and high speed.

### SUMMARY OF THE INVENTION

The present invention is intended for a method of obtaining an image data and the converter therefor, as set out in claims 1 and 11, said image data being used for filling an inner region or an outer region of a graphic figure.

According to the present invention, the method comprises the steps of: (a) preparing segment data expressing segments which form a contour of a graphic figure, (b) generating connection mode data expressing connection modes between the segments on the basis of the segment data, (c) extracting an imperfect segment from the segments with reference to the connection mode data, where the imperfect segment is defined as an segment having a floating terminal point, (d) correcting the segment data and the connection mode data so as to remove the floating terminal point of the imperfect segment, thereby to convert the imperfect segment into a perfect segment whose terminal point exists on another segment, (e) detecting a loop formed with the segments with reference to the connection mode data after being subjected to the step (d), thereby to obtain loop data expressing the loops, and (f) obtaining image data used for filling an inner region or an outer region of the loop with an image filler, on the basis of the loop data and the segment data.

Preferably, the step (b) includes the steps of: (b-1) specifying rectangles surrounding the segments, respectively, in an image plane on which the graphic figure is defined, (b-2) extracting interrelated rectangles from the rectangles, where the interrelated rectangles are defined as rectangles belonging to areas overlapped with each other on the image plane, respectively, and (b-3) finding a connection mode between segments surrounded by the interrelated rectangles, to generate the connection mode data.

According to an aspect of the present invention, the step (b-2) is attained though the steps of (b-21) dividing the image plane repeatedly, thereby to obtain a tree of divisional areas in which each of the divisional areas is related to a node of the tree according to a sequence of division, (b-22) comparing each of the rectangles with the divisional areas, thereby to find respective minimum divisional areas including the rectangles, respectively, (b-23) detecting the interrelated rectangles within rectangles whose respective minimum divisional areas belong to a same node or direct nodes in the tree.

Preferably, the connection modes are previously classified into a perfect connection mode and a imperfect connection mode, where the perfect connection mode is defined as a mode in which a terminal point of a segment exists on another segment and the imperfect connection mode is defined as a mode other than the perfect connection mode.

The step (c) may be attained through the steps of: (c-1) detecting a segment being connected to another segment in the imperfect connection mode with reference to the connection mode data, and (c-2) extracting the segment detected in the step (c-1) from the segments expressed by the segment data.

In a preferred embodiment of the present invention, the step (e) includes the steps of: (e-1) detecting one or more fundamental loops in which segments are serially connected only in a fundamental connection mode, the fundamental connection mode being defined as a mode where a terminal point of a segment exists at a terminal point of another segment, (e-2) detecting one or more bridging loops formed by bridging between already detecting loops with a segment, the loop data is generated with respect to both of the fundamental loops and the bridging loops.

According to another aspect of the present invention, an image data converter for inputting segment data expressing segments which form a contour of a graphic figure, to convert the segment data into image data used for filling an inner region or an outer region of the graphic figure, comprising: (a) mode data generating means for generating connection mode data expressing a connection mode between the segments on the basis of the segment data, (b) a memory means for storing the connection mode data as a data base, (c) a correction means for correcting the segment data and the connection mode data being stored in the memory means so as to express a state where terminal points of each segment exist on other segments, respectively, (d) a loop detecting means for detecting a loop formed with the segments with reference to the connection mode data after subjecting a correction in the correction means, thereby to obtain a loop data expressing the loop, and (e) image data generating means for generating an image data used for filling an inner region or an outer region of the loop with an image filler, on the basis of the loop data and the segment data. The construction is illustrated in Fig. 1, as a function block diagram.

The present invention also provides method of sorting segments defined on an image plane into segment groups to detect a loop formed of the segments in each of the segment groups, the method comprising the steps of: (a) receiving segment data expressing the segments, (b) specifying rectangles surrounding the segments in the image plane, respectively, (c) finding areas in which the rectangles are located, on the image plane, respectively, (d) sorting the rectangles into rectangle groups so that rectangles belonging to a common area fall under a common rectangle group, and (e) sorting the segments into the segment groups according to rectangle groups into which respective rectangles corresponding to the segments are sorted in the step (d).

Accordingly, an object of the present invention is to provide a method of obtaining an image data required for filling an inner or outer region of a graphic figure with an image filler at high speed, even if the contour of the graphic figure is imperfectly exressed by segment data.

Another object of the present invention is to automatically fill the inner or outer region at a high efficiency.

A further object of the present invention is to detect mutual connections of segments at a high speed.

Yet another object of the present invention is to provide a method in which loops inlcuded in a graphic image are systematically detected.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a function diagram showing the construction of the present invention,
Fig. 2 is a block diagram showing an overall structure of an image processing system having an image converter according to a preferred embodiment of the present invention,
Fig. 3A through Fig. 3H are diagrams showing data conversion sequence with respect to graphic figures,
Fig. 4 is a flowchart showing the overall operation of the preferred embodiment,
Fig. 5A and Fig. 5B are explanatory diagrams showing a rectangular approximation,
Fig. 6 is a flowchart showing a process of conducting the rectangular approximation,
Fig. 7A through Fig. 7C are explanatory diagrams showing divisions of an image plane according to a quadruple branching classification method,
Fig. 8 is an explanatory diagram showing the quadruple branching classification method employed in a classification of segments,
Fig. 9 is a flowchart showing a segment classification process employing the quadruple branching classification method,
Fig. 10 is an explanatory diagram showing connection modes and connection codes,
Fig. 11 is a flowchart showing a connection mode data generation process,
Fig. 12 is an explanatory diagram of a terminal correction,
Fig. 13 and Fig. 14 are flowcharts showing a terminal point correction process,
Fig. 15 through Fig. 18 are diagrams showing examples of the terminal point correction,
Fig. 19 is an explanatory diagram showing the relationships between loops,
Fig. 20 is a schematic block diagram showing a loop data generation process,
Fig. 21 is an explanatory diagram showing loop detection,
Fig. 22 is a flowchart showing a loop detection process,
Fig. 23 is a diagram showing an example subjected to the loop detection,
Fig. 24 is an explanatory diagram showing a bridging loop detection process,
Fig. 25 is an explanatory diagram showing a quadruple branching classification method for investigating an inclusion relationship between loops,
Fig. 26 is an explanatory diagram showing a principle for investigating the inclusion relationship between the loops,
Fig. 27 is a flowchart showing a process for generating an image data to be delivered to a laser plotter, and
Fig. 28 and Fig. 29 are explanatory diagrams showing image data processing for filling an inner region of a graphic figure.

### DESCRIPTION OF THE PREFERRED EMBODIMENTS

### A. Overall Structure and Overall Operation of the Preferred Embodiment

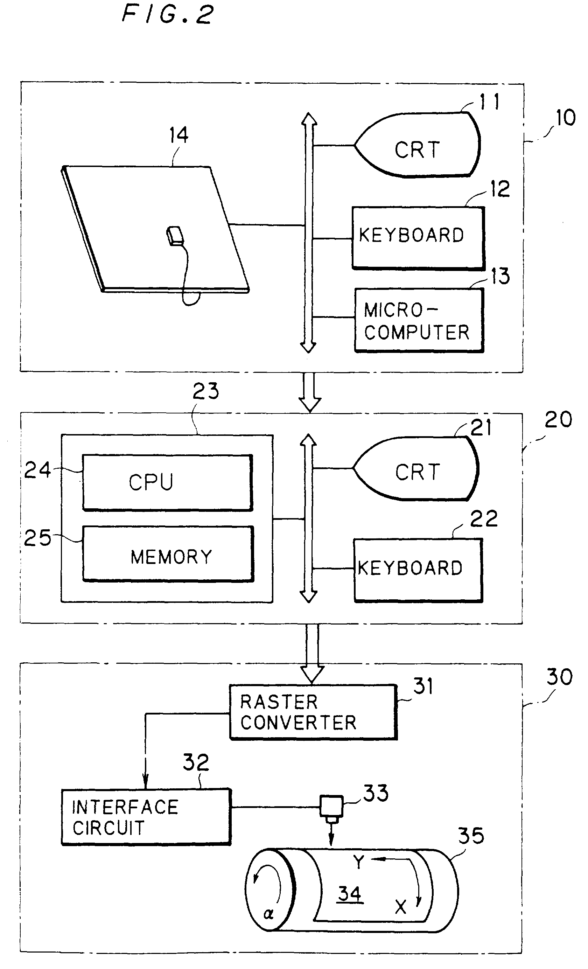

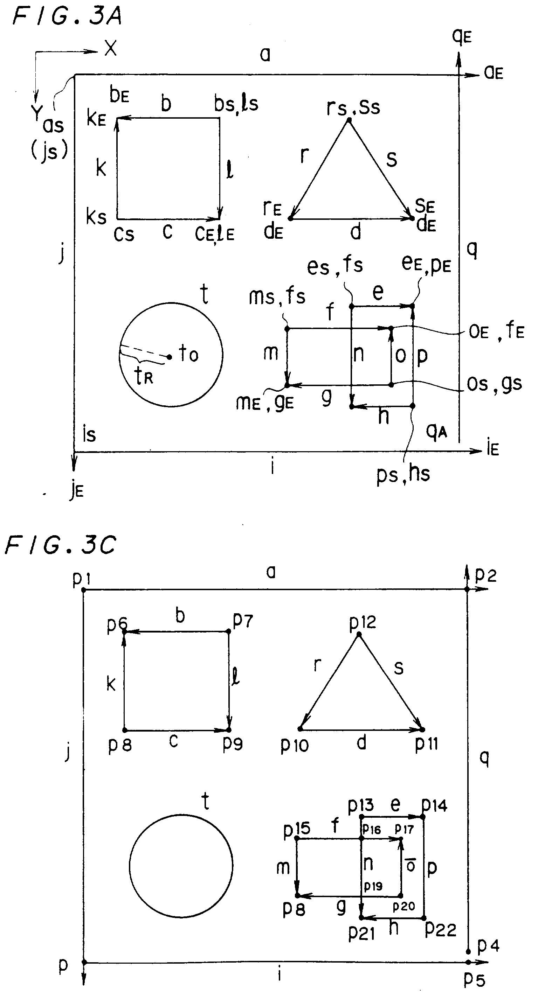

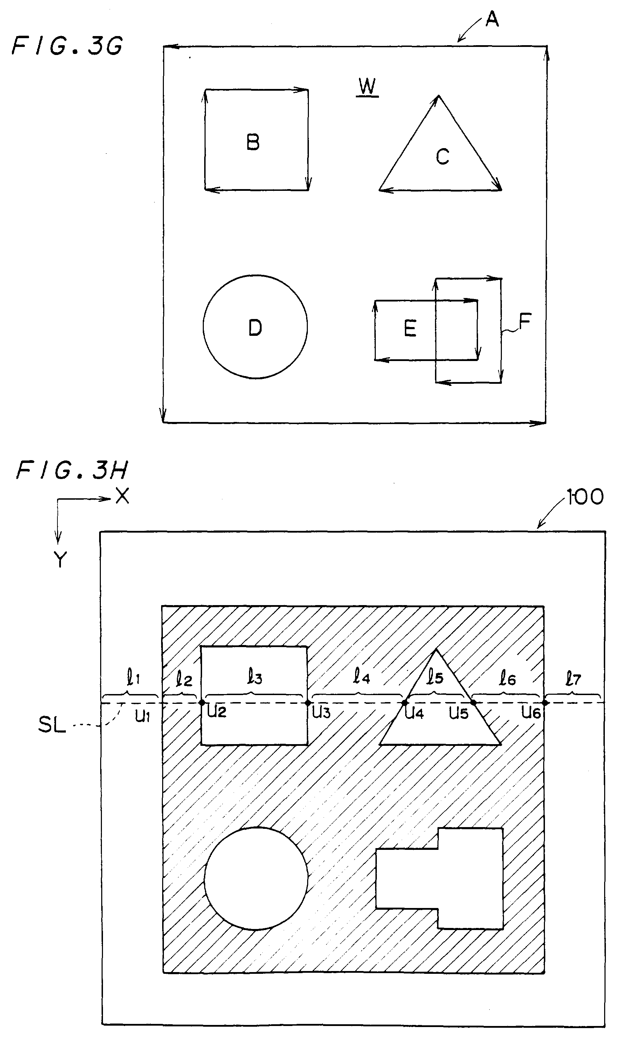

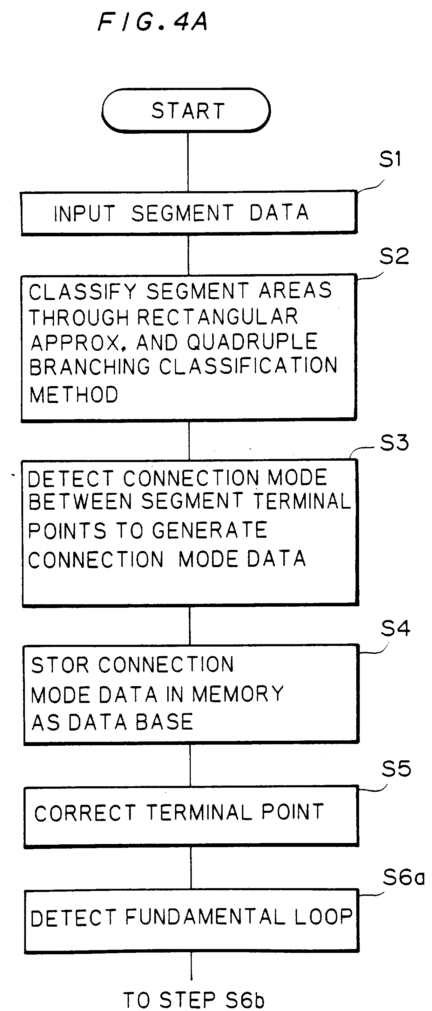

Fig. 2 is a block diagram showing the overall structure of an image processing system having an image data converter according to a preferred embodiment of the present invention. Data with respect to the contour line of a graphic figure to be recorded is produced in a CAD system 10. The CAD system 10 has a CRT 11, a keyboard 12, a microcomputer 13 and a digitizer 14. When it is desired to fill the hatched region defined with graphic figures shown in Fig. 3H, for example, segment data with respect to segments a-t (Fig. 3A) expressing the respective contour lines of the graphic figures are inputted to the CAD system 10 through operation of the digitizer 14 ( process step S1 in Fig. 4A). The segment data include respective start point coordinates and end point coordinates of the segments a-t. With respect to the segment a in Fig. 3A, for example, the two dimensional coordinates of the start point a_{S} and the end point a_{E} thereof are provided in the segment data. The segment t is a circle, and its shape and position in the image plane are identified by the coordinates of its central point t_{O} and the value of its radius t_{R}, which are also input to the CAD system 10.

The input operation of the segment data to the CAD system 10 is conducted similarly to that in the system employing a cutting machine. Therefore, the segments a-t expressed by the segment data may be crossed or separated from each other. In other words, the segments a-t may not be in "perfect connection mode" which is defined as state where the terminal points, i.e., the start point and the end point of each segment, are just connected to the terminal points of another segment, respectively. For example, as shown in Fig. 3A, the end point a_{E} of the segment a is not located at the position of the end point q_{E} of the segment q. Connection states other than the perfect connection state will be hereinafter referred as "imperfect correction modes". A terminal point which is not located on another segment such as the end points a_{E} and a_{q} will be referred as "a floating terminal point" or "a floating start (end) point".

Now back to Fig. 2, the segments data prepared in the CAD system 10 are delivered to an image data converter 20 through on-line or off-line transmission. The image data converter 20 has a CRT 21, a keyboard 22 and a microcomputer 23, the microcomputer 23 being provided with a CPU 24 and a memory 25.

The image data converter 20 receives the segment data with respect to the segments a-t, and converts the segment data into image data expressing the image shown in Fig. 3G. The conversion includes the following processes (a) through (e), details of which will be described later.

### (a) Connection Mode Data Generating Process

In the process (a), the connection mode between the respective terminal points of the segments a-t are detected, to generate "connection mode data" expressing the connection mode between the segments a-t. In the preferred embodiment, the process (a) is conducted through the following sub-processes (a-1) and (a-2).

### (a-1) Segment Classification Process

This is a sub-process to roughly find which segments may be connected with each other within the segments a-t, as a preliminary process of the connection mode data generation. More particularly, an image plane on which the segments a-t are given is imaginarily divided into a plurality of divisional areas, and it is found which divisional area each of the segments a-t belongs to. The segments a-t are classified into segment groups according to their respective belonging areas.

Since segments belonging to different areas cannot be connected with each other, a pair of segments belonging to different areas is not subjected to the following sub-process (a-2) of detecting a connection mode between segments.

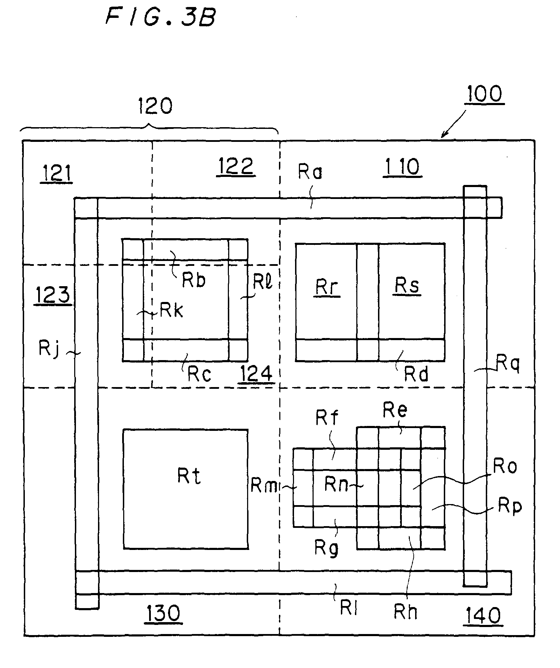

By conducting the sub-process (a-1) before the subprocess (a-2), the following sub-process (a-2) can be carried out at high efficiency, since a pair of segments having no possibility of mutual connection is eliminated as subjects for connection mode detection. As will be described later in detail with reference to Fig. 3B, the sub-process (a-1) is carried out through "rectangular approximation" and "quadruple branching classification method", as indicated in the process step S2 in Fig. 4A. The data obtained in the sub-process (a-1) and indicating the contents of the segment groups are called "segment classification data".

### (a-2) Segment Connection Mode Detection Process

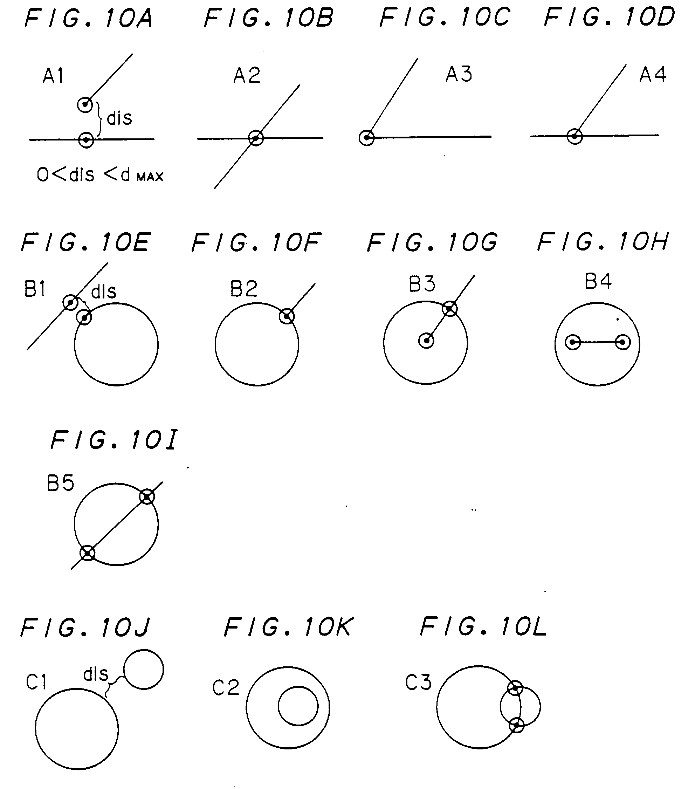

In the sub-process (a-2), the connection modes between the segments a-t are detected through detecting the connection modes between the respective terminal points of the segments a-t while taking the result of the classifiction process (a-1) into consideration. Connection mode data are generated on the basis of the detected segment connection modes. For example, the connection mode between the end points a_{E} and q_{E} is detected and recognized as in "connection mode A2 (Fig. 10B)", according to a classification rule described later. For each of the segments a-t, the connection mode data has information as to:
to what other segment the segment is connected;
in what connection mode the segment is connected to the other segment; and
by what characteristic point the connection is represented.

For example, the connection between the segments a and q in Fig. 3C is represented by the characteristic point p2 which is the cross point of the segments a and q. The sub-process (a-2) is indicated as the process step S3 in Fig.4A.

### (b) Connection Mode Data Storage Process

The connection mode data obtained through the process (a) are stored in the memory 25 in the form of a data base. (the process step S4 in Fig. 4A). The data base is utilized in the following processes (c), (d) and the like.

In the present invention, the term "data base" is used for indicating a data system in which data included therein are arranged according to a predetermined data arrangement rule, and the data can be systematically accessed or corrected from the exterior of the memory storing the data system. Since the connection mode data with respect to the segments a-t are systematically classified and arranged into the data base, the following processes can be carried out at high efficiency and high speed.

### (c) Terminal Point Correction Process

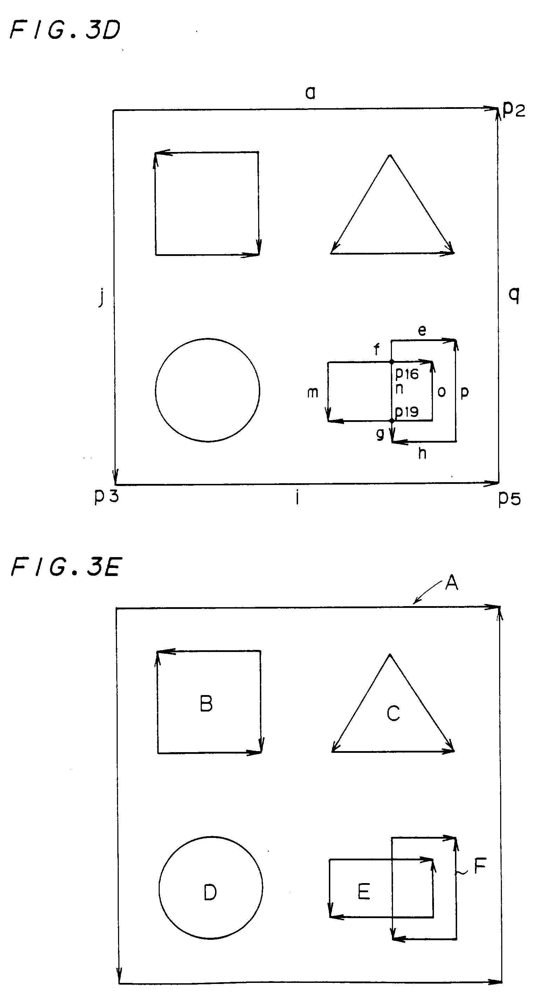

The process (c) is intended for correction of the terminal point coordinates of a segment in the imperfect connection mode. The terminal point coordinates are corrected on the basis of the connection mode data stored in the memory 25, so that the segment in the imperfect connection mode is converted into that in the perfect connection mode (the process step S5 in Fig. 4A). In other words, the chain of the segments is corrected into a graphical figure having a single stroke contour line. In the process (c), the connection mode data and the segment data are corrected with reference to the contents of the connection mode data themselves. Through the process (c), data expressing the corrected graphical figures shown in Fig. 3D, for example, are obtained.

### (d) Loop Detection Process

When the process (c) is completed, there is no segment in the imperfect connection mode, and all of the chains of the segments are in the form of single stroke contour lines corresponding to the closed graphical figures which fit the operator's will. Each of the chains of segments is traced with reference to the data base, through which a contour line forming a loop is detected. In Fig. 3E, loops A-F to be detected are illustrated.

In the preferred embodiment, the loop detection is carried out through the following sub-processes (d-1) and (d-2) so that the loops are detected at high efficiency.

### (d-1) Fundamental Loop Detection Process

The connection modes between the terminal points of segments are classified into "a fundamental connection mode" in which the terminal point of one segment is located at the same position with the terminal point of another segment, and other connection modes. The fundamental connection mode is shown in Fig. 10C as "connection mode A3".

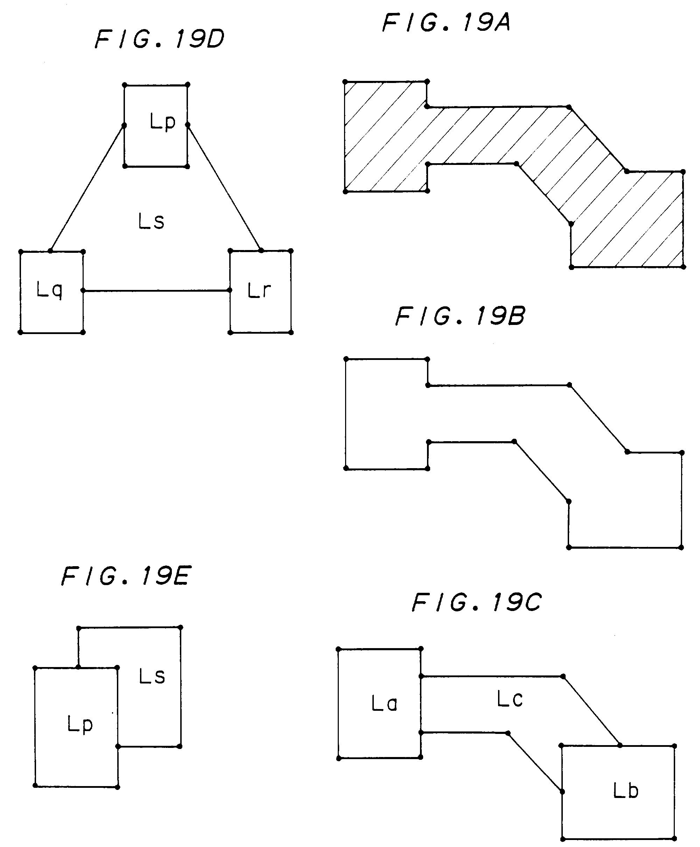

In the process (d-1), a loop in which segments are serially connected in only the fundamental connection mode is detected through the step of tracing segments serially connected in the fundamental connection mode (the process step S6a in Fig. 4A). In the present application, such a loop is called "a fundamental loop". The loops Lₐ and L_{b} shown in Fig. 19C and Fig. 21B are examples of fundamental loop, details of which will be described later.

### (d-2) Bridging Loop Detection Process

In the sub-process (d-2), a chain of segments at least one of which is connected with another segment in a connection mode other than the fundamental connection mode is traced, to detect "a bridging loop" which is formed by bridging between points on one or more fundamental loops. The loop L_{c} in Fig. 19C is an example of the bridging loop.

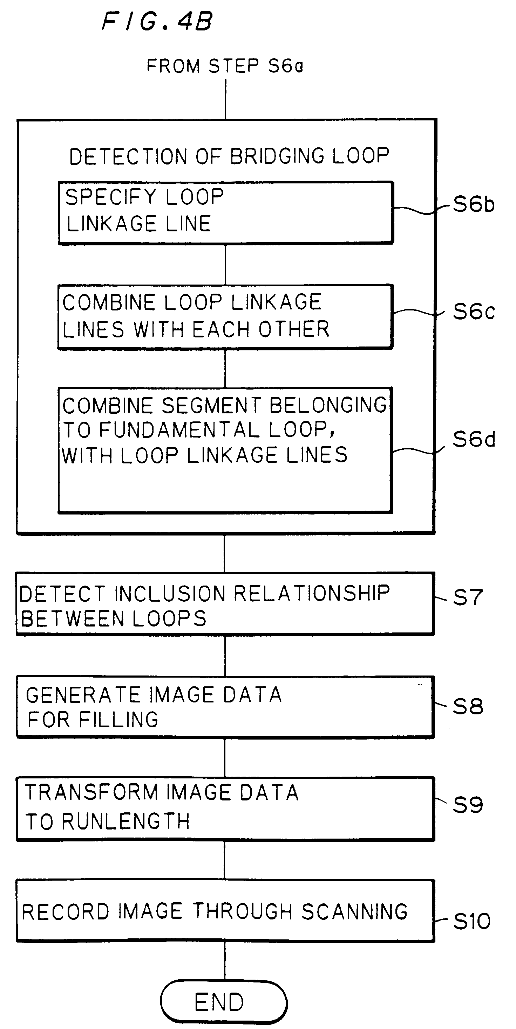

More particularly, a chain of segments not belonging to a fundamental loop is traced along the chain, whereby "a loop linkage line" linking the points on one or more fundamental loops with each other is first detected (the process step S6b in Fig. 4B). Examples of the loop linkage line are shown in Fig. 21B as lines Ca and Cb.

Although the linkage line links the points on one or more fundamental loops with each other, a closed loop cannot be formed only by the linkage line. For obtaining a closed loop, a plurality of linkage lines each of which links two fundamental loops together are combined with each other according to a predetermined combination rule (the process step S6c in Fig. 4B).

The information with respect to the combined loop linkage lines is coupled with information as to a segment belonging to an already detected loop, whereby a bridging loop including a connection mode other than the fundamental connection mode is found (the process step S6d in Fig. 4B).

Note that the original segment data were so prepared in the CAD system 10 as to express a set of segments forming loops perfectly or imperfectly. Therefore, when the detection of the fundamental loop and the bridging loop is completed, no segments remain which are unused for detecting the loops. After the detection, both of the fundamental loop and the bridging loop are subjected to the following processes as "loops" without discrimination between the fundamental loop and the bridging loop. The data expressing the loop, which is obtained in the loop detection process, is called "loop data".

### (e) Process of Generating Image Data for Filling

After detecting the loops, it is found whether the inner region or the outer region of each loop should be filled, on the basis of the "inclusion relationship" between the loop and the other loops. The term "inclusion relationship" is defined as a relationship where one or more other loops are included or located in the inner region of the loop now considered. The information indicating what region is to be filled is generated in this process, and it is added to the segment data for indicating which side of the segment is to be subjected to the filling.

More particularly, the inclusion relationship between the loops are first detected (the step S7 in Fig. 4B). For example, the loop B-F in Fig. 3E are included in the loop A. Through the detection of the inclusion relationship, it can be found what region is to be filled. In the preferred embodiment, the information indicating a region to be filled is given to the segment data by so resetting the direction of each segment that the left side region of each segment with respect to the direction of the segment or vector corresponds to a region to be filled.

Through the process, the image data for filling is generated (the process step S8 in Fig. 4B). The steps S2-S8 hereinabove described are carried out in the image data converter 20.

The image data obtained in the image data converter 20 are delivered to a laser plotter 30, which has a raster converter 31 for converting the image data into run-length data (the process step S9). The run-length data are transmitted to an interface circuit 32, which controls a laser beam generated in a laser oscillator 33 according to the run-length data, the control being ON/OFF control of the laser beam.

The laser beam is supplied to the photosensitive surface of a photosensitive film 34, which is wound around a rotary drum 35. The rotary drum 35 is coupled with a motor (not shown) and driven by the motor to rotate in the direction α. The laser oscillator 33 is translationally moved in the axial direction Y of the rotary drum 35 with a drive mechanism (not shown). Therefore, through the ON/OFF control of the laser beam being synchronized with the rotation of the rotary drum 33 and the translational movement of the laser oscillator 33, an image shown in Fig. 3H is recorded on the photosensitive film 34 in the form of an exposure pattern (the process step S10 in Fig. 4B). The record is a serial record along scanning lines, and the direction X and Y are main scanning and subscanning directions, respectively. The laser plotter 30 may be that of a flat bed type, a stationary drum type in which the inner surface of the drum is scanned, or the like, in place of the rotary drum type. The laser beam may be one beam or multi-beam.

The image data processing system shown in Fig. 2 has the overall structure and overall operation hereinabove described, detail of which will be described in the following sections.

### B. Details of Segment Classification Process

For the graphic figures shown in Fig. 3A, the segment data D_{seg} with respect to the segments a-t, which are prepared in the CAD system 10, have information specifying the respective coordinates of the respective terminal points (start points and end points) of the segments a-t, as shown in Table 1.

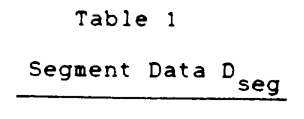

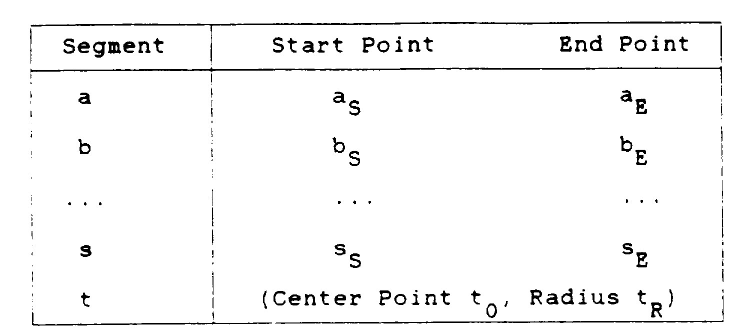

The coordinates of the start points, the end points and the central point are provided in the form of two dimensional coordinates (X, Y) defined on the image plane 100 which is not illustrated in Fig. 3A but illustrated in Fig. 3B.

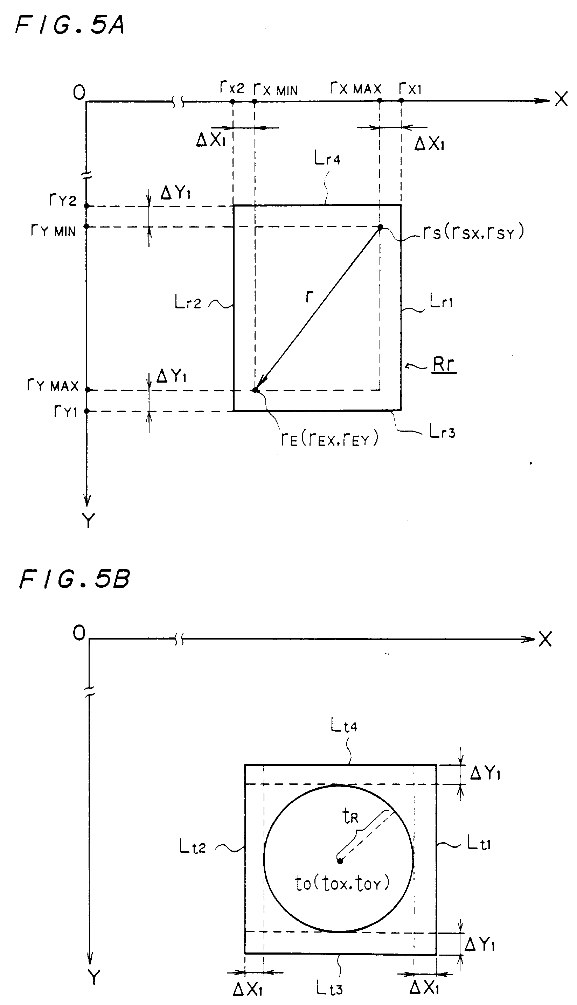

The segment data D_{seg} are stored in the memory 25, and the CPU 24 generates data expressing rectangular regions Rₐ-Rₜ (Fig. 3B) which include the segments a-t therein, respectively, on the basis of the segment data D_{seg}. For the rectangular region Rᵣ, for example, the respective X coordinates r_{SX} and r_{SE} of the both terminal points:${\text{r}}_{\text{S}} {\text{= (r}}_{\text{SX}} {\text{, r}}_{\text{SY}} \text{)}$${\text{r}}_{\text{E}} {\text{= (r}}_{\text{EX}} {\text{, r}}_{\text{EY}} \text{)}$ are compared with each other, and the larger value and the smaller value within them are employed as a maximum value r_{XMAX} and a minimum value r_{XMIN}, respectively. In the example shown in Fig. 3A:${\text{r}}_{\text{XMAX}} {\text{= r}}_{\text{SX}}$${\text{r}}_{\text{XMIN}} {\text{= r}}_{\text{EX}}$ as shown in Fig. 5A. Similarly, a maximum value r_{YMAX} and a minimum value r_{YMIN} with respect to the Y coordinates are defined as:${\text{r}}_{\text{YMAX}} {\text{= r}}_{\text{EY}}$${\text{r}}_{\text{YMIN}} {\text{= r}}_{\text{SY}}$

Then, values r_{X1} and r_{Y1} which are larger than the maximum values r_{XMAX} and r_{XMIN} by Δ X₁ and Δ Y₁, respectively, are defined, where the values Δ X₁ and Δ Y₁ are predetermined margins. Similarly, values r_{X2} and r_{Y2} are defined as being smaller than the minimum values r_{X2} and r_{Y2} by Δ X₁ and Δ Y₁, respectively. Namely, the values r_{X1}, r_{X2}, r_{Y1} and r_{Y2} are defined through the following expressions (7)-(10), and they are illustrated in Fig. 5A as points on the coordinate axes.${\text{r}}_{\text{X1}} {\text{= r}}_{\text{XMAX}} {\text{+ Δ X}}_{\text{1}}$${\text{r}}_{\text{Y1}} {\text{= r}}_{\text{YMAX}} {\text{+ Δ Y}}_{\text{1}}$${\text{r}}_{\text{X2}} {\text{= r}}_{\text{XMIN}} {\text{- Δ X}}_{\text{1}}$${\text{r}}_{\text{Y2}} {\text{r}}_{\text{YMIN}} {\text{- Δ Y}}_{\text{1}}$

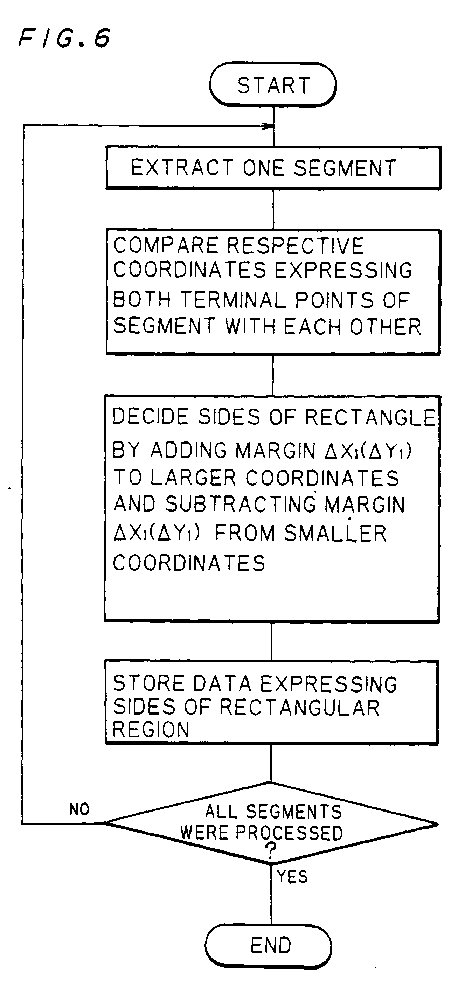

Then, two lines being in parallel to the Y axis:${\text{L}}_{\text{r1}} {\text{: X = r}}_{\text{X1}}$${\text{L}}_{\text{r2}} {\text{: X = r}}_{\text{X2}}$ and other two lines being in parallel to the X axis:${\text{L}}_{\text{r3}} {\text{: Y = r}}_{\text{Y1}}$${\text{L}}_{\text{r4}} {\text{: Y = r}}_{\text{Y2}}$ are specified. The rectangular region Rᵣ for the segment r is defined as a region surrounded by the four lines or sides Lᵣ₁-Lᵣ₄. The process is illustrated in Fig. 6, as a flowchart.

With respect to the segment (circle) t shown in Fig. 5B, the rectangular region Rₜ is defined as a region whose contour is defined by the four lines Lₜ₁-Lₜ₄. The lines Lₜ₁-Lₜ₄ are defined through the expressions (15)-(18), where (tₒₓ, tₒᵣ) is a two dimensional coordinate of the central point t on the image plane.${\text{L}}_{\text{t1}} {\text{: X = t}}_{\text{OX}} {\text{+ t}}_{\text{R}} {\text{+ΔX}}_{\text{1}}$${\text{L}}_{\text{t2}} {\text{: X = t}}_{\text{OX}} {\text{- t}}_{\text{R}} {\text{-ΔX}}_{\text{1}}$${\text{L}}_{\text{t3}} {\text{: Y = t}}_{\text{OY}} {\text{+ t}}_{\text{R}} {\text{+ΔY}}_{\text{1}}$${\text{L}}_{\text{t4}} {\text{: Y = t}}_{\text{OY}} {\text{- t}}_{\text{R}} {\text{-ΔY}}_{\text{1}}$

The data expressing the rectangular regions Rₐ-Rₜ are stored in the memory 25.

After obtaining the rectangular regions Rₐ-Rₜ, it is found to what area in the image plane each of the rectangular regions Rₐ-Rₜ belongs. For example, the segment b is considered in the following description.

First, the image plane 100 shown in Fig. 3B is divided into four divisional areas 110, 120, 130 and 140, by dividing the image plane 100 with one vertical line and one horizontal line. Then, it is found whether or not the rectangular region R_{b} corresponding to the segment b is perfectly included in one of the divisional areas 110-140, and if included, it is further found in what divisional area the rectangular region R_{b} belongs. In the example shown in Fig. 3B, it can be found that the rectangular region R_{b} is perfectly included in the divisional area 120. The divisional area 120 including the rectangular region R_{b} is further divided into four divisional areas 121-124, and it is found whether or not the rectangular region R_{b} is included in one of the divisional areas 121-124. As understood from Fig. 3B, no divisional area within the areas 121-124 perfectly includes the rectangular region R_{b}, since the rectangular region R_{b} extends over the two areas 121 and 122.

When the term "minimum inclusion area" is so defined as to express a divisional area which has a minimum size within the divisional areas perfectly including the rectangular region now considered, the minimum inclusion area for the rectangular region R_{b} is the divisional region 120.

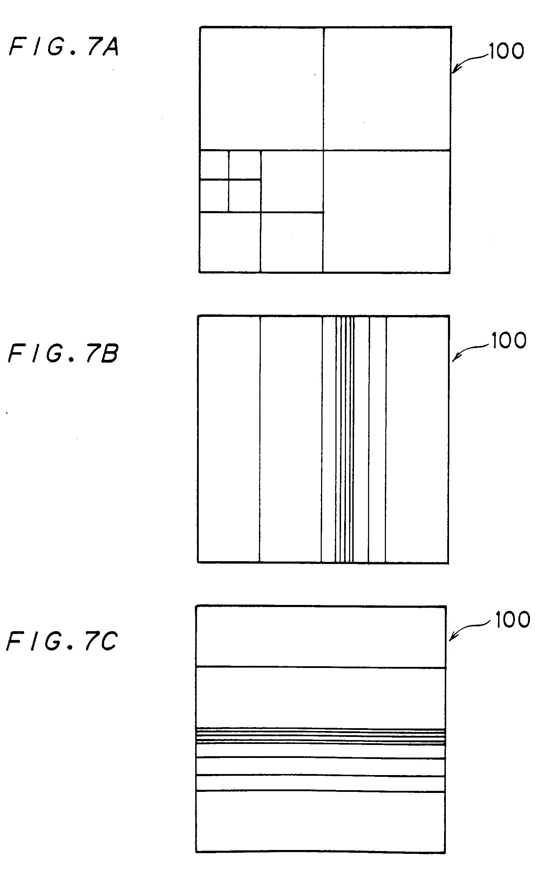

In general, when a rectangular region is given, the image plane 100 is divided into four divisional areas repeatedly, as shown in Fig. 7A. Then, inclusion relationships between the rectangular region and the four divisional areas in each repeated division are investigated, through which a minimum inclusion area corresponding the rectangular region is found. Since the rectangular region is so defined as to include a segment, the minimum inclusion area thus found can be regarded as a divisional area which has a minimum size within the divisional areas including the segment. Rectangular regions or segments whose respective minimum inclusion areas are identical with each other are classified into a same class.

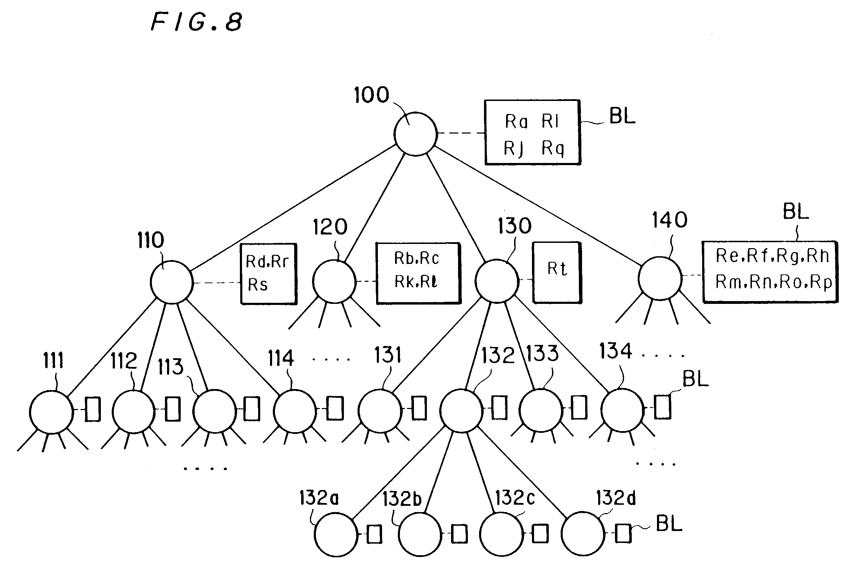

The process will be understood more clearly, with reference to the "classification tree" schematically shown in Fig. 8. The tree is repeatedly branched into four or quadruple branches from the "root" which is defined by the whole area corresponding to the image plane 100. In the first branching, four divisional areas or "nodes" 110-140 are obtained. The second branching gives four sets of four divisional areas 111-114, ..., 131-134, ... as secondary "nodes", although the secondary divisional areas obtained from the areas 120 and 140 are not illustrated in Fig. 8.

The branching can be repeated an infinite number of times in a geometrical scheme, but, in practice, the minimum inclusion area will be found after branching a finite number of times, since each of the segments has a finite size. Therefore, in the preferred embodiment, the number of times for the repetition is previously determined so that the repetitions are completed when the divisional areas smaller than the predetermined small area are once obtained through the divisions. The minimum divisional areas obtained through the repeated divisions, which are the areas 132a-132d in Fig. 8, for example, are called "leaves".

When all of the root, the nodes and the leaves are called "nodes" in the extended meaning, all of the rectangular regions Rₐ-Rₜ or the segments a-t are classified into their corresponding nodes which are the minimum inclusion areas therefor.

For example, the rectangular region R_{b} or the corresponding segment b belongs to the node 120, since the minimum inclusion area for the rectangular region R_{b} is the divisional area 120. Such a classification rule is applied to all rectangular regions Rₐ-Rₜ, and the result of the classification for all regions Rₐ-Rₜ is illustrated in the blocks BL in Fig. 8 which associate with the respective nodes. The data expressing the classified relationships between the rectangular regions Rₐ-Rₜ (or the segments a-t) and the nodes are the "segment classification data". For the set of rectangular regions Rₐ-Rₜ, the nodes 110-140 are "leaves". The segment classification data D_{SH} are stored in the memory 25, in the form shown in Table 2.

**Table 2**

| Segment Classification Data D_{SM} | |
|---|---|
| Node | Segment |
| 100 | {a, i, j, q} |
| 110 | {d, r, s} |
| 120 | {b, c, k, ℓ} |
| 130 | {t} |
| 140 | {e, f, g, h, m, n, o, p} |

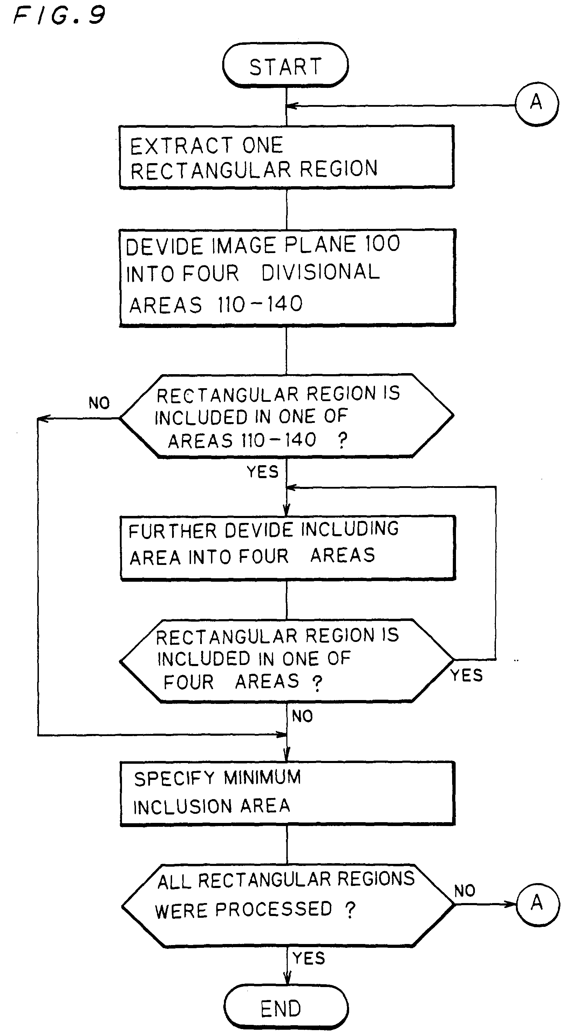

The classification process is also illustrated in Fig. 9, as a flowchart.

Through the classification, it can be found which pairs of segments cannot be connected with each other. Within the nodes or the divisional areas shown in Fig. 8, two segments whose respective rectangles belong to direct nodes in the tree may be connected with each other, but two segments belonging to indirect nodes cannot be connected with each other, where the term "direct nodes" is used on the analogy of a family line or family tree. An example of the former is a pair of segments one of which belongs to the node 100 and the other belongs to the node 110, and that of the latter is a pair of segments belonging the nodes 110 and 120, respectively. Of course, two segments belonging to the same node may be connected with each other.

Accordingly, from the result of the classification using the quadruple branching classification method, the number of pairs of segments to be subjected to the following connection mode detection process can be reduced. In other words, when "interrelated rectangles" are defined as rectangles belonging to divisional areas overlapped with each other on the image plane, pairs of segments surrounded with the interrelated rectangles are subjected to the connection mode detection process.

In the classification process, the margins ΔX₁ and ΔY₁ are introduced in order to prevent the error in that the possibility of a connection is denied for two segments existing mutually adjacent divisional areas and being connected with each other at the boundary between the divisional areas. The quadruple branching classification method may be so carried out that the image plane is repeatedly divided into four divisional areas only with vertical division lines (Fig. 7B) or only with horizontal division lines (Fig. 7C). The former is especially suitable for a graphic figure having many vertical segments, and the latter is suitable for that having many horizontal segments.

In general, N-branching classification method may be employed for the segment classification, where N is a positive integer equal to or larger than two.

### C. Details of Segment Connection Mode Detection Process

In this process, mutual connection modes between the segments a-t are detected with referecne to the segment classification data stored in the memory 25. In order to systematically carry out the detection, connection modes between segments are previously classified into plural types.

The types of connection mode are shown in Fig. 10A to Fig. 10L, respectively, and they consist of twelve types of connection mode A1-A4, B1-B5, and C1-C3. The mode A3 indicates "fundamental connection mode" in which the respective terminal points of the two segments are located at a common position. The other mode types are not corresponding to the fundamental connection mode, and for example, the mode A4 indicates a connection mode in which the terminal point of one segment is connected with the other segment at a point other than the terminal points of the other segment. As understood from Fig. 10, the connection modes A1-A4 correspond to connection modes between two line segments each of which has two terminal points, while the modes B1-B5 are those for two segments one of which has two terminal points and the other is a closed segment, e.g., a circle. The remaining modes C1-C3 are those for two closed segments.

The connection modes A1 and C1 are so defined as to include connection conditions in which the minimum distance d ᵢₛ between the two segments satisfies the unequality (19) with respect to the predetermined gap margin dₘₐₓ.${\text{O < d}}_{\text{is}} {\text{< d}}_{\text{max}}$ This is because such nearly connected segments should be regarded as connected segments, when the small gap between the segments is provided through a rough preparation of the segment data in the CAD system 10 although they are to be connected. In other words, only segments separated from each other by a distance larger than the gap margin dₘₐₓ are treated as being ot connected. In the preferred embodiment, the values of the gap margin dₘₐₓ and the margins ΔX₁ and ΔY₁ are identical with each other.

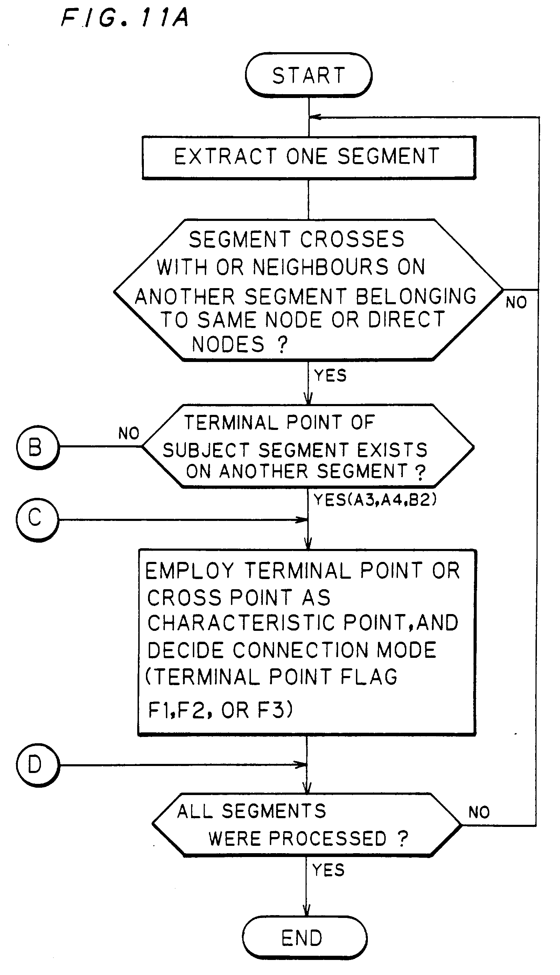

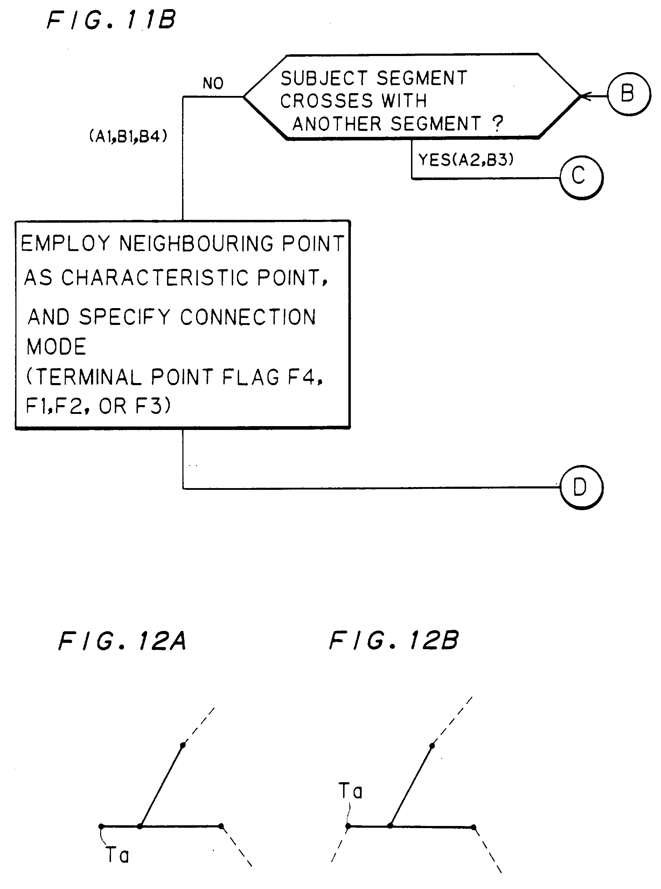

In generating the connection mode data, the characteristic point representing or characterizing the connection mode is specified for each connection between the segments. The characteristic points in respective connection modes are shown in Fig. 10 as black dots each surrounded with a small circle. For the segments a-t shown in Fig. 3C, the connection modes between the segments a-t are detected and classified into the connection mode types shown in Fig. 10. The detection process is carried out for the segments belonging to the same mode and for the segments belonging to different nodes existing in the same direct line, where "direct line" means a straight series of branches 100, 130, 132 and 132a, for example. On the contrary, the segments belonging to different nodes existing different branch lines or chains, e.g., the nodes 120 and 130, are not subjected to the detection. In parallel to the detection of the connection mode, a characteristic point with respect to each connection mode is also detected. This process is expressed in Fig. 11, as a flowchart, and the result of the detection is shown in Table 3, where the "connection code" is data expressing the connection mode by a code system, although they are indicated in the same symbols A1-A4, ... in Table 3.

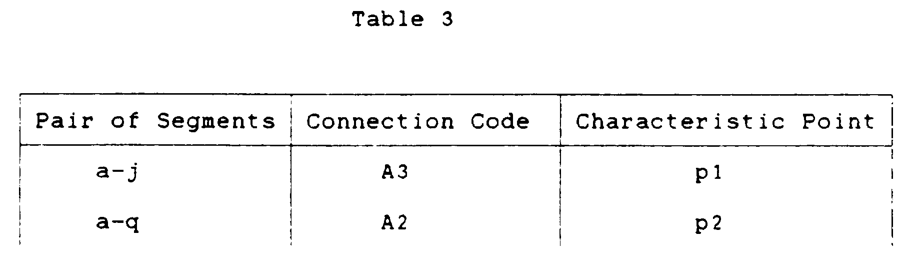

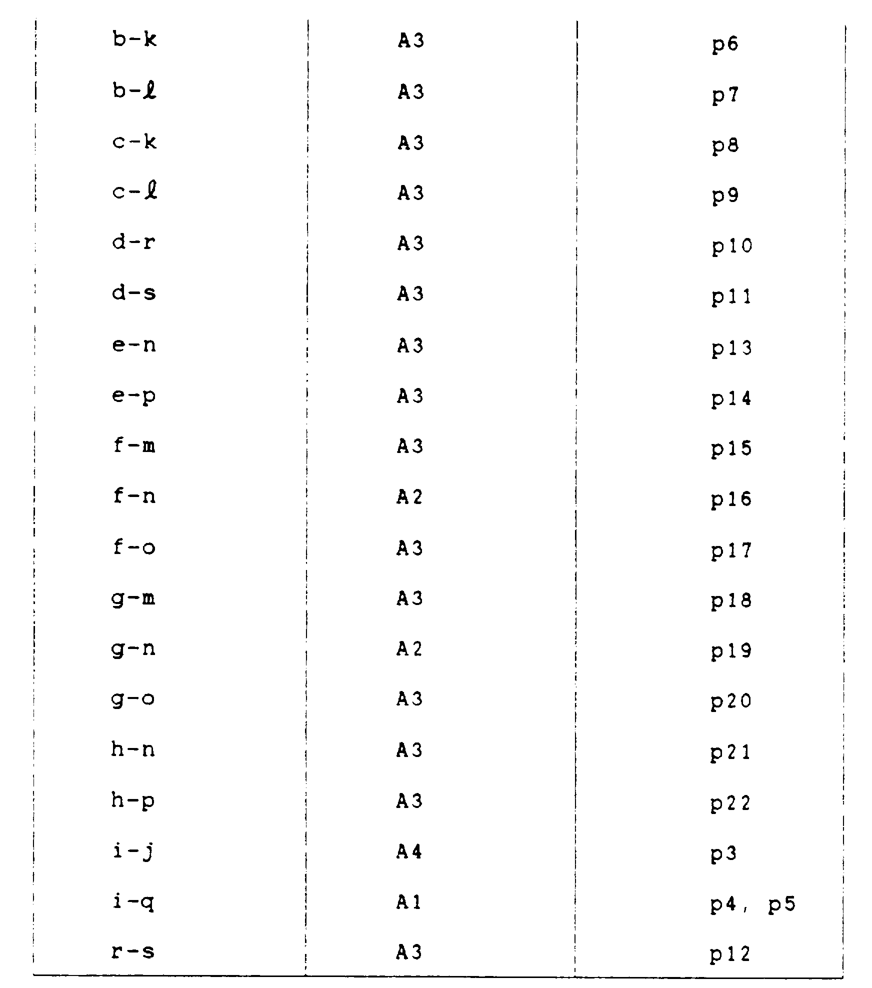

On the basis of the result shown in Table 3, the connection mode data D_{CR} shown in Table 4 are generated in the CPU 24. In Table 4, "related segment" means another segment connected to the segment indicated in the first column, and "number of related segments" means the number thereof. The "serial number of related segment" is an address at which the related segment is stored in the memory 25. The "characteristic point data" consists of the coordinates Pₙ of the characteristic point and "terminal point flag F_{C}" indicating what positional relationship holds between the terminal point of the related segment and the segment in the first column. The terminal point flag F_{C} indicates the positional relationship according to the rule shown in Table 5.

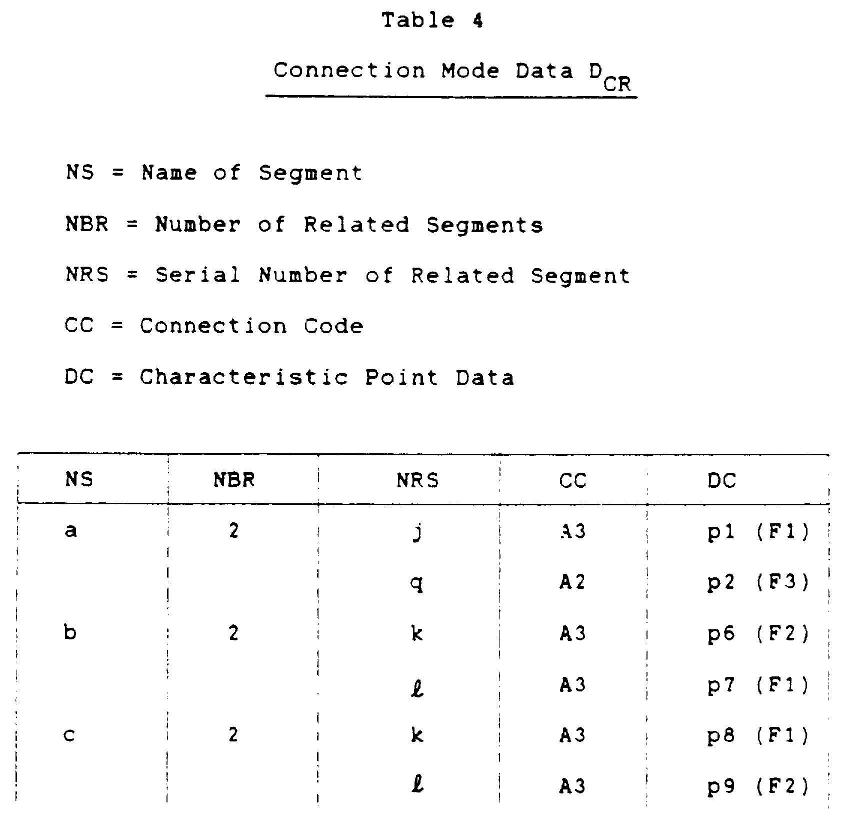

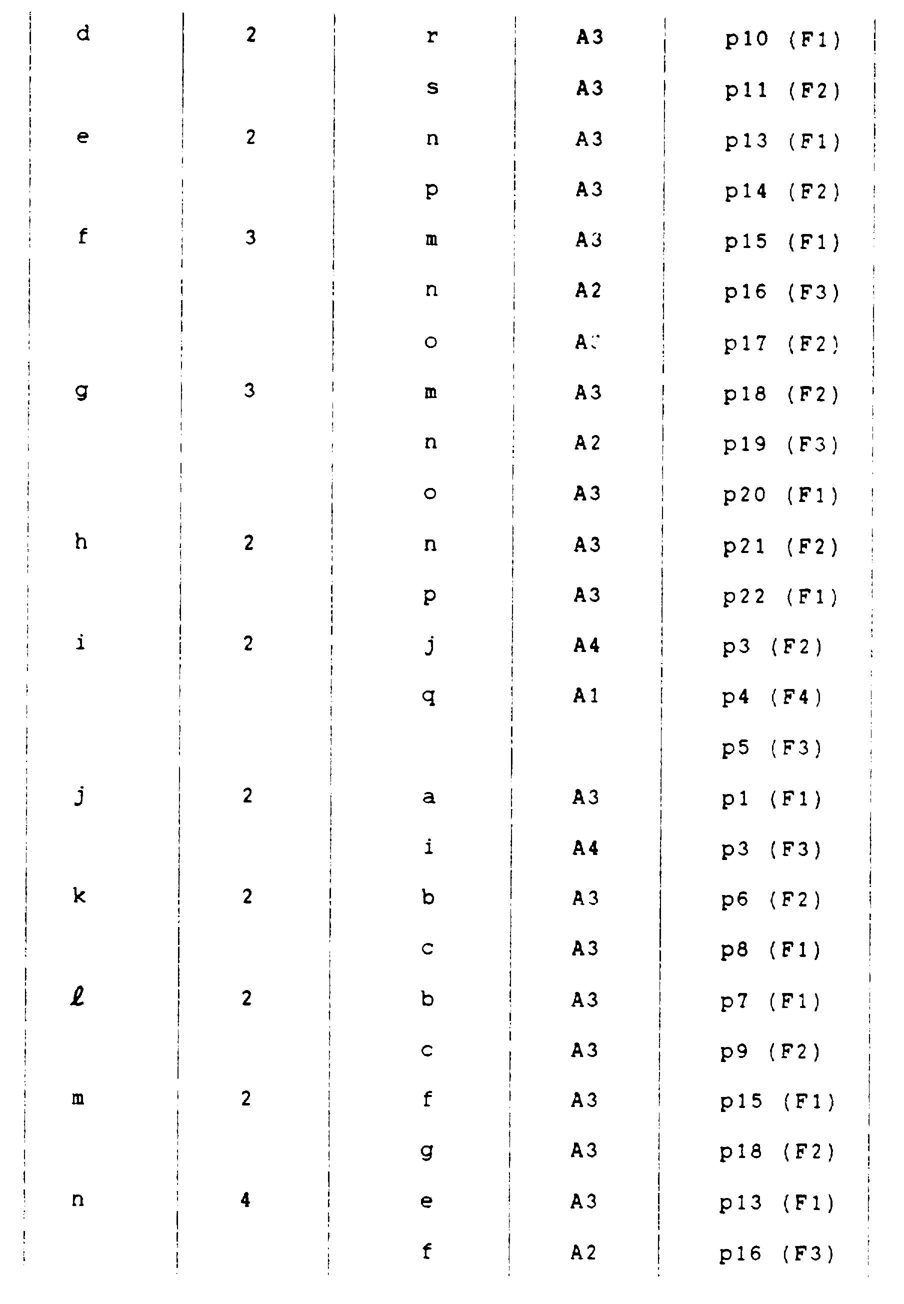

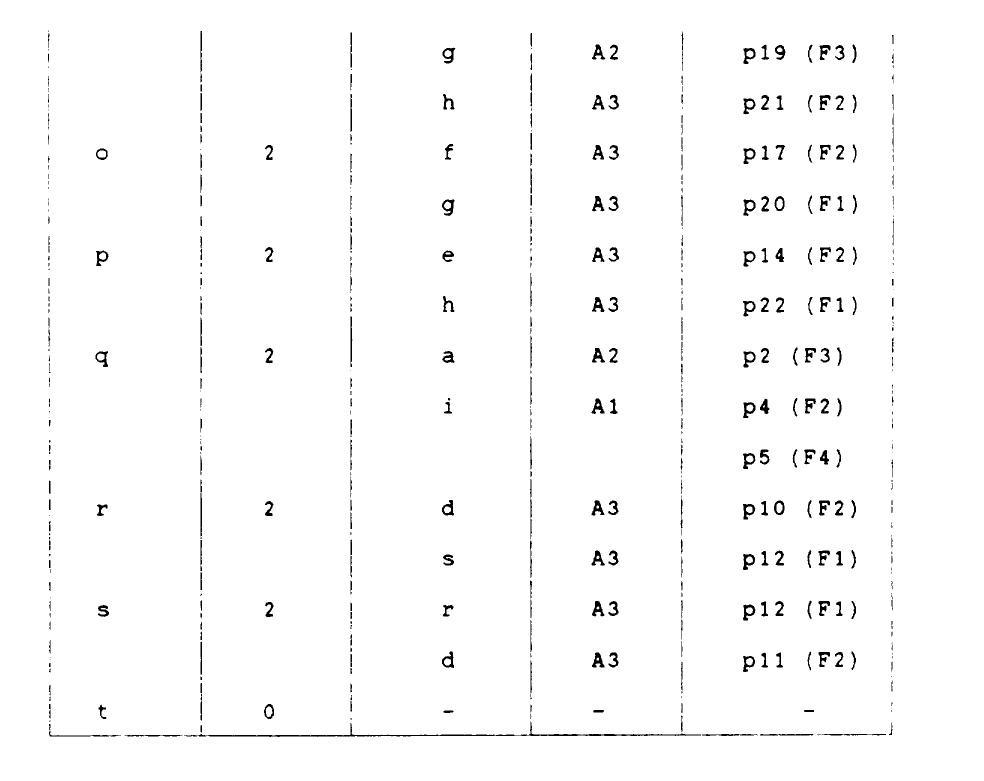

**Table 5**

| Terminal Point Flag F_{C} | |
|---|---|
| F_{C} | Contents |
| F1 | The character point is the start point of the segment. |
| F2 | The character point is the end point of the segment. |
| F3 | The character point is located on the segment. |
| F4 | The character point is located out of the segment. |

The connection mode data D_{CR} are stored in the memory 25, in the form a data base where the relationships between the information included therein can be easily found by access from the exterior of the memory 25. Therefore, the relationships between the information shown in the respective columns in Table 4 is easily found from the exterior of the memory 25, and the connection mode data D_{CR} can be arbitarily read and corrected in the following processes.

### D. Detail of Terminal Point Correction Process

The CPU 24 corrects a pair of segments interconnected in an imperfect connection mode into segments having perfect connection mode A3 or B2. A segment having no floating terminal point such as a segment in mode C1, C2 or C3 is not subjected to the correction. Therefore, a segment to be corrected is one which is in one of the seven connection modes A1, A2 (A4), B1, B3, B4 and B5. As to the connection mode A4, the correction is carried out only for the segment connected with another segment having a floating terminal point Tₐ shown in Fig. 12A, since it is not necessary to correct the segment when the terminal point T_{b} (Fig. 12B) of the other segment connected therewith has no floating terminal point.

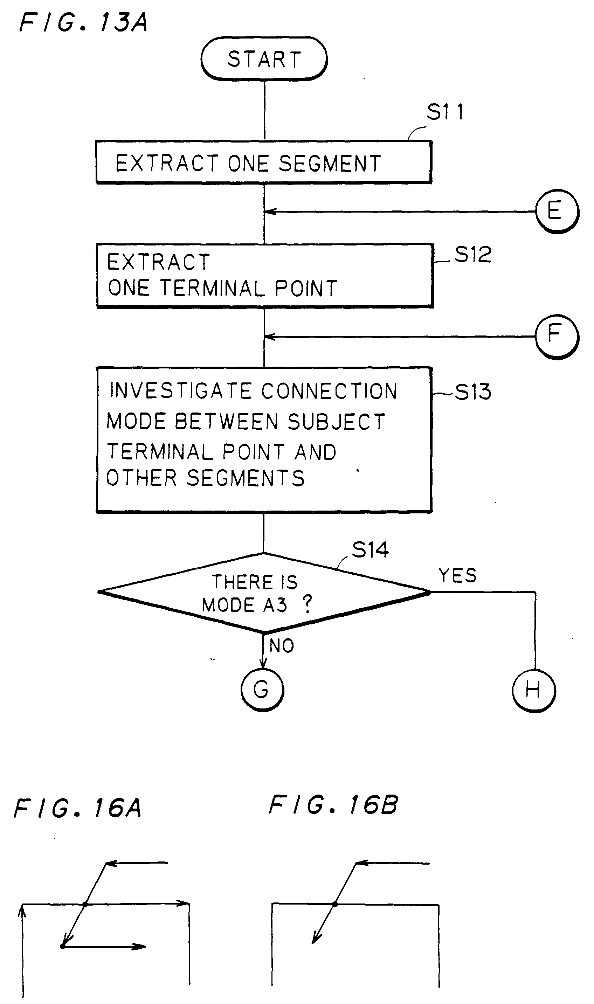

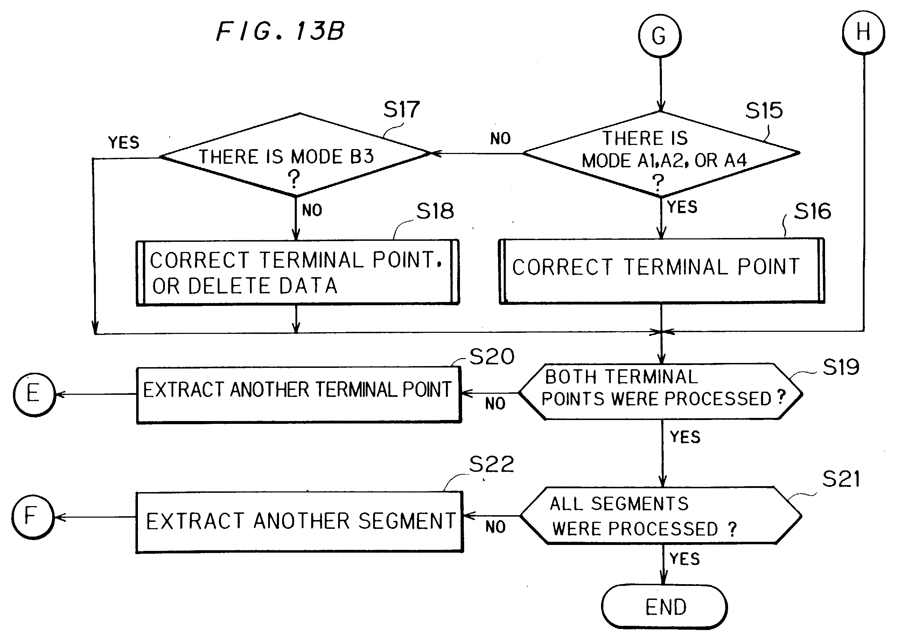

The correction process is shown in Fig. 13. In Fig. 13, one of the segments is extracted, and one of terminal points of the selected segment is further extracted. Then, the connection mode between the extracted terminal point and another segment is found with reference to the connection mode data (the process steps S11-S13). When the terminal point is connected with another segment in the mode A3, which is the fundamental and perfect connection mode, the process progresses to the steps S19 and S20, and then returns to the step S12. Namely, the terminal point is not subjected to the correction, and another terminal point is extracted to be subjected to the steps S11-S13.

On the other hand, when it is found in the process step S14 that the terminal point is not connected with another segment in the connection mode A3, it is judged whether or not the terminal point is connected with another segment in the connection mode A1, A2 or A4 (the process step S15). When it is connected in the connection mode A1, A2 or A4, the terminal point is so corrected as to be connected with the other segment in the perfect connection mode through the process step S16, details of which will be described later. If it is found in the process step S15 that the terminal point is not connected with another segment in the connection mode A1, A2 or A4, it is judged in the process step S17 whether or not the terminal point is connected with another segment in the connection mode B2. When a connection in the connection mode B2 is found, the terminal point is not subjected to the correction in the process step S18, since the mode B2 is one of the perfect connection modes. On the other hand, if a connection in the mode B2 is not found, it can be concluded that the terminal point is connected with another segment in the mode B1, B3, B4 or B5. This is because the modes C1-C3 are out of consideration from the fact that "terminal point" cannot be defined for a circle. In the process step S18, the terminal point in the mode B1, B3, B4 or B5 is corrected into that in the mode B2, or the data expressing the terminal point is deleted form the data base. Detail of the process step S18 will be also described later. Through the process steps S19-S20, such a routine is repeated for respective terminal points of all segments.

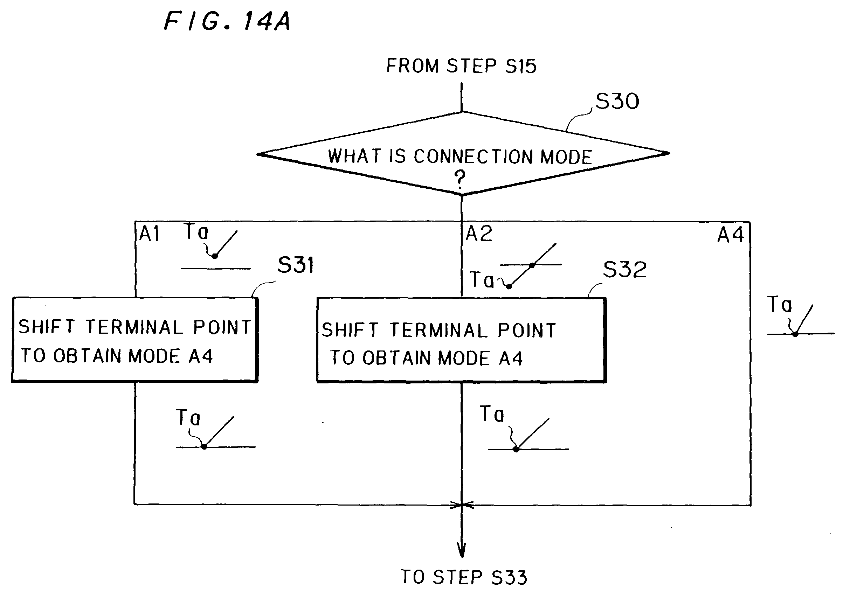

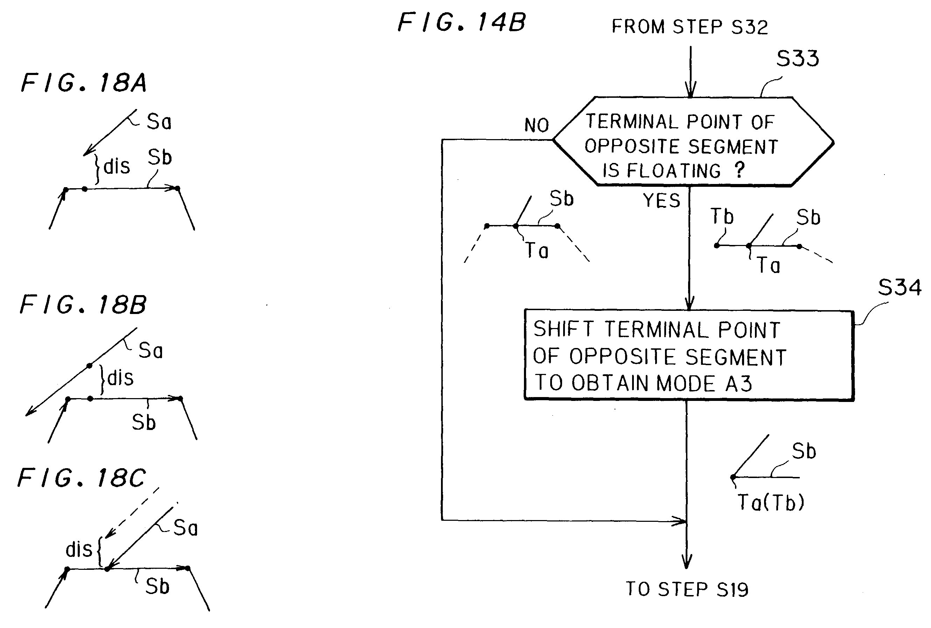

Fig. 14A and Fig. 14B are flowcharts showing the detail of the process step S16 in Fig. 13. In the process step S30, it is judged in which mode within the modes A1, A2 and A4 the subjected terminal point is connected to another segment. When in mode A1 or A2, the terminal point Tₐ is so corrected to be positioned on the other segment S_{b} (the process steps S31 and S32). The correction is executed through a correction of the connection mode data and the coordinate value of the terminal point included in the segment data. Through the correction, the terminal point in the mode A1 or A2 is preliminarily converted into that in the mode A4. When the connection mode of the terminal point is originally in mode A4, no correction is executed and the mode A4 is reserved.

Then, it is judged in the process step S33 whether or not the terminal point T_{b} of the other segment S_{b} is a floating terminal point. When it is a floating terminal point, the terminal point T_{b} is shifted to the corrected point Tₐ, whereby the connection mode A3 is obtained (the process step S34). If the terminal point T_{b} is not a floating temrinal point, the correction or shift of the terminal point T_{b} is not required.

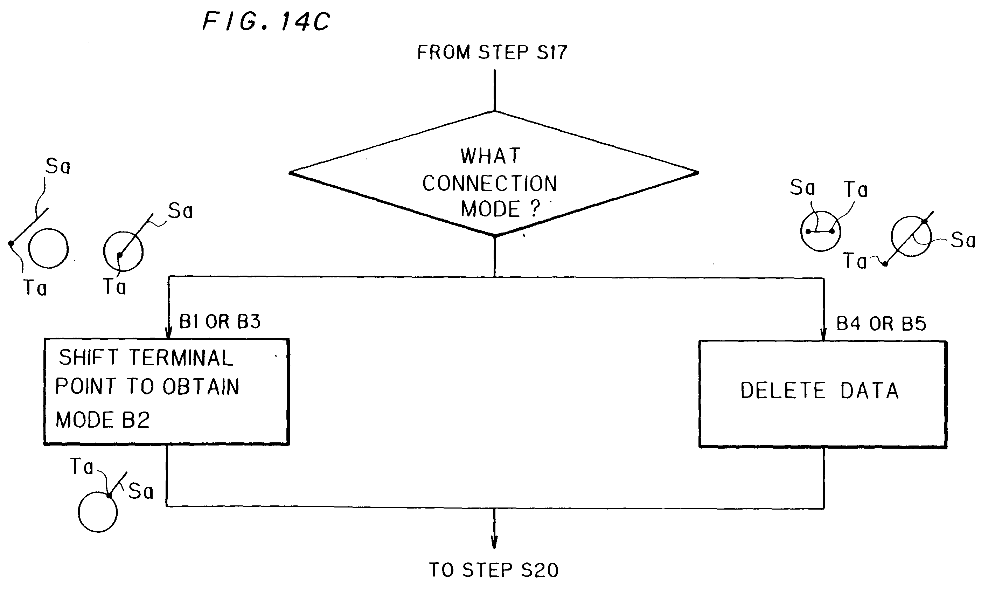

Fig. 14C is a flowchart showing the detail of the process step S18 in Fig. 13. When the connection mode is the mode B1 or B3, the terminal point Tₐ is so shifted that the connection mode thereof is converted into the mode B2. If the connection mode of the terminal point Tₐ is the mode B4 or B5, the data respecting the segment Sₐ is deleted from the connection mode data and the segment data. This is because the modes B4 and B5 are not appropriate for constructing a closed loop, as seen from Fig. 10, and it can be regarded that the segment having the mode B4 or B5 is prepared by mistake.

With respect to the segments a-t in Fig. 3C, the above indicated process is conducted as follows: First, it should be noted that the seven segments a, q, i, j, f, g, and n are in the imperfect connection modes, within the segments a-t, since each of the seven segments has a connection mode other than the connection modes A3 and B2 in the connection mode data D_{CR} in Table 4.

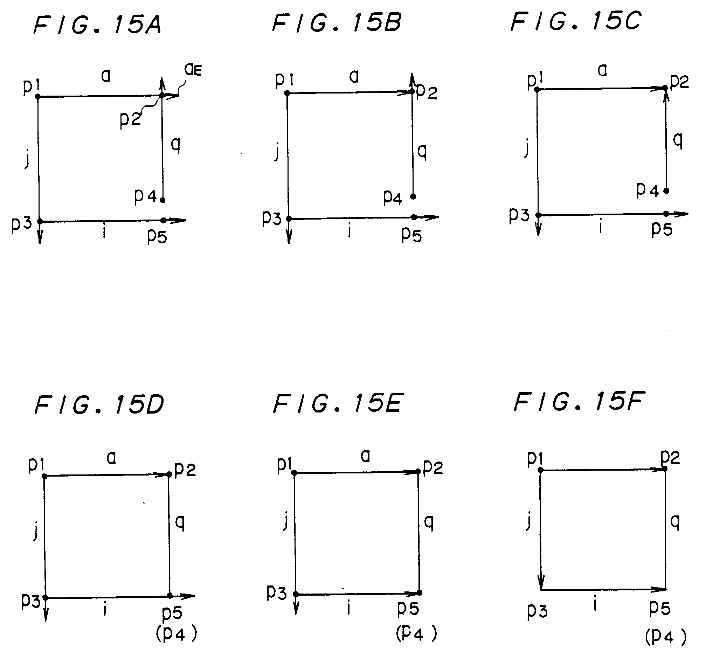

As to the segment a, it is found from Table 4 that the connection with the segment q is "imperfect", and the position of the terminal point a_{E} shown in Fig. 15A is corrected to the position of the character point p2, through the process step S32 in Fig. 14A. More particularly, in the row having NS = a and NRS = q in the connection mode data D_{CR} (Table 4), the connection code A2 is rewritten to A4, and the terminal point flag with respect to the characteristic point p2 is rewritten to "F2" indicating an end point. Therefore, within the connection made data for the segment a, the data:
"q A2 p2 (F3)" is rewritten to:
"q A4 p2 (F4)" and, correspondingly, the connection mode data for the segment q is rewritten from:
"a A2 p2 (F3)" to:
"a A4 p2 (F3)"

In parallel with or in series with the rewrite processes, the coordinate value of the terminal point a_{E} of the segment a, which is included in the segment data, is rewritten to that of the characteristic point p2. The state thus obtained is shown in Fig. 15B.

Next, the data for the characteristic point q included in the connection mode data with respect to the segment q is rewritten from
"a A4 p2 (F3)" to
"a A3 p2 (F3)" through the process steps S32 and S33, so that the connection mode in which the segments a and q are interconnected at the characteristic point p2 is corrected to the "perfect connection mode", as shown in Fig. 15C.

Similarly, the respective connection modes between the segments q and i, and that between the segments i and j are corrected through the process order shown in Fig. 15D through Fig. 15F. As a result, the corrected connection mode data for the segments a, q, i and j are obtained as shown in Table 6.

**Table 6**

| NS | NBR | NRS | CC | DC |
|---|---|---|---|---|
| a | 2 | j | A3 | p1 (F1) |
| | | q | A3 | p2 (F2) |
| i | 2 | j | A3 | p3 (F2) |
| | | q | A3 | p5 (F1) |
| j | 2 | a | A3 | p1 (F1) |
| | | i | A3 | p3 (F2) |
| q | 2 | a | A3 | p2 (F1) |
| | | i | A3 | p5 (F2) |

In Table 6, the data with respect to the characteristic point p4 is not present, since the characteristic points p4 and p5 coincident with each other after the correction.

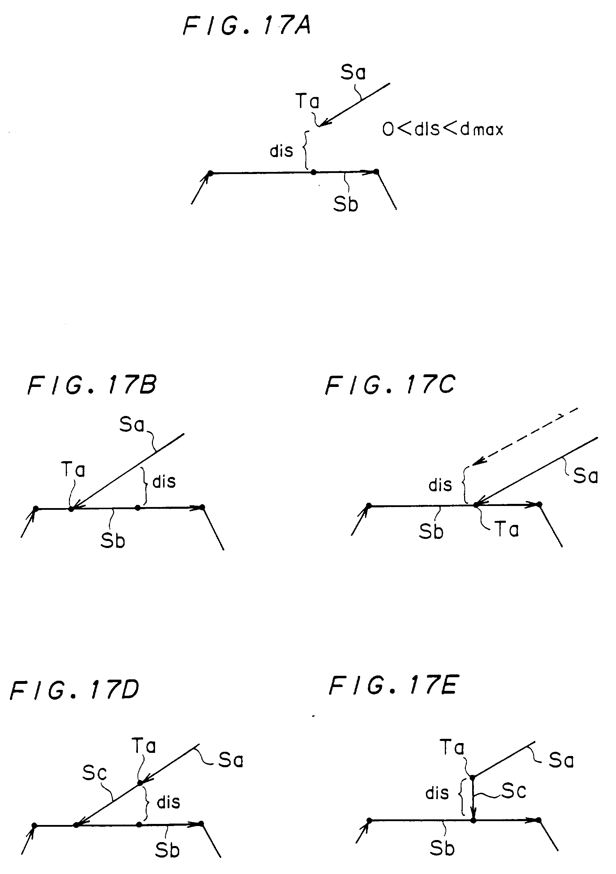

As shown in Table 4, the connection mode A2 belonging to the "imperfect connection mode" exists also in the segment data for the segments f, g and n. However, the segment data for these segments are not subjected to the correction process, since each of the respective opposite segments to which the segments f, g and n are connected in the mode A2 has terminal points connected to other segments, respectively. For example, the segment f shown in Fig. 3C is connected to the segment n at the characteristic point p16 in the connection mode A2, however, the connection mode data for the segment f is not corrected because the terminal points of the segment f connect to the segments e and h, respectively. If the connection is in the state shown in Fig. 16B rather than that shown in Fig. 16A, correction is required. In other words, a connection mode data for a segment connected to another segment in the connection mode A2 is corrected only when the latter segment has a floating terminal point. The routine for judging whether a mode data in the connection mode A2 should be corrected or not is also attained in the process step S32 in Fig. 14A.

With respect to the connection mode A1 shown in Fig. 10A, the correction can be carried out through various procedures. For example, when the segment Sₐ and S_{b} shown in Fig. 17A are imperfectly interconnected in the connection mode A1, the terminal point Tₐ may be corrected through an extension of the segment Sₐ as shown in Fig. 17B, or alternatively through a translational shift of the segment Sₐ as shown in Fig. 17C. A new segment S_{c} shown in Fig. 17D or that shown in Fig. 17E may be added to the segment Sₐ, in place of the procedures shown in Fig. 17B and 17C.

In the preferred embodiment, one of the procedures is selected to be used according to the type of positional relationship between the segments Sₐ and S_{b}. If the positional relationship is that shown in Fig. 18A, for example, the procedure shown in Fig. 17B is not suitable for the correction since the perfect connection mode is not obtained through the procedure of Fig. 17B, as shown in Fig. 18B. In such a case, the other procedure shown in Fig. 17C can be selected to be used, because the perfect connection mode shown in Fig. 18C can be obtained through the correction according to the procedure shown in Fig. 17C. On the other hand, if the type of positional relationship is not that shown in Fig. 18A, the perfect connection mode is obtained by shifting the terminal point.

Through the correction process, a set of segments shown in Fig. 3D each of which having no "floating terminal point" is obtained.

### E. Detail of Loop Detection Process

After the connection mode data and the segment data corresponding to the state shown in Fig. 3D are obtained, loops each of which is formed by a series connection of segments are detected. Since the connection mode data include all of the information with respect to interconnections between segments, all of the loops can be detected through the process where a chain of the segment is traced from an arbitrary segment. However, when the segment data are prepared in the CAD system 10 as those for a cutting machine, the graphic figure shown in Fig. 19A, for example, is often expressed by a set of the linked loops Lₐ, L_{b} and Lₑ shown in Fig. 19C, rather than a single or independent loop shown in Fig. 19B. Therefore, when the basic tracing method described above is employed in the loop detection process, a relatively long time is required to detect all of the loops. Accordingly, the following improved detection process is employed in the preferred embodiment, in order to detect the loops at a high efficiency and a high speed.

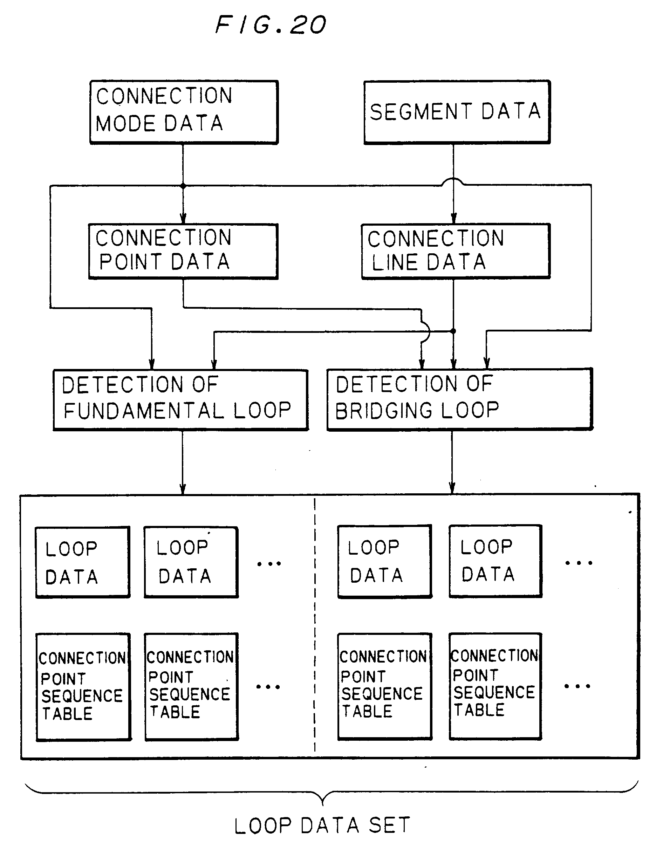

In the improved detection process schmatically shown in Fig. 20, "connection point data" is first obtained on the basis of the connection mode data after it is subjected to the terminal point correction. The connection point data consists of the two dimensional coordinates of a connection point, and information indicating two segments which are interconnected at the connection point. The "connection point" corresponds to the "characteristic point" which is indicated in the connection mode data. The connection point data is referred in order to know which segments are interconnected at a connection point.

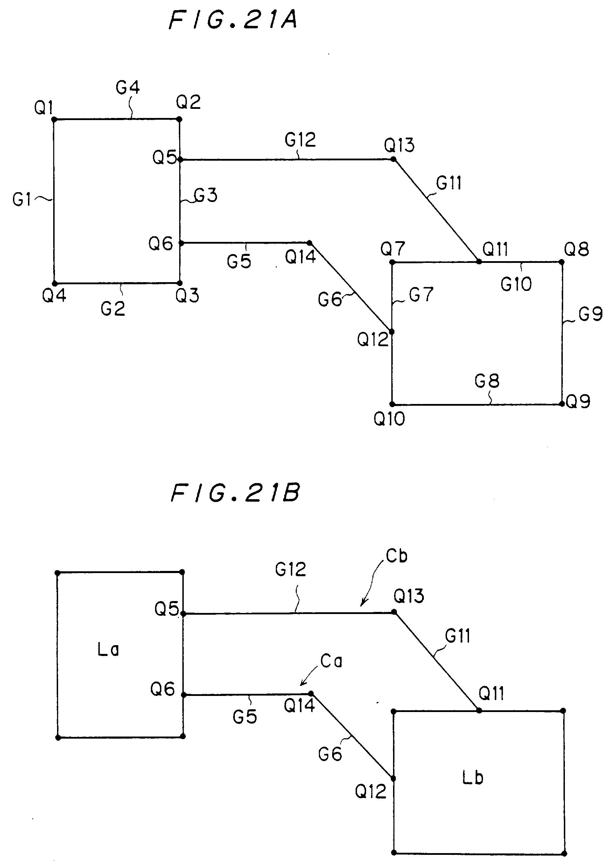

For example, the connection point data with respect to the connection point Q1 in Fig. 21A is obtained as shown in Table 7, where the graphic figure shown in Fig. 21A corresponds to that in Fig. 19C except for the difference in size, and the "first" and "second" segments indicated in Table 7 indicate two segments interconnected at the connection points, respectively.

**Table 7**

| | |
|---|---|
| Connection Point: | Q1 |
| First Segment: | G1 |
| Second Segment: | G4 |
| Coordinates of Connection Point: | (X₁, Y₁) |

The respective connection point data for the other connection points Q2-Q12 are also obtained, similarly to that for the connection point Q1.

As shown in Fig. 20, "connection line data" is then generated on the basis of the segment data. The connection line data has information designating all of the segments G1-G12 (Fig. 21A) in the initial state in the loop detection process. Namely,$\text{Connection Line Data =(G1, G2, ..., G11, G12),}$ in the initial state. The number of the segments designated by the connection line data decreases as the loop detection process progresses, the detail of which will be described later.

Furthermore, "loop data" is so defined as to have information representing a detected loop, and it is given for each loop. For example, when the loop Lₐ shown in Fig. 21B is detected, loop data for the loop Lₐ is generated as shown in Table 8.

**Table 8**

| Loop Data for Loop Lₐ | |
|---|---|
| Serial Number of Loop: | Lₐ |
| Number of Segments: | 4 |
| Serial Number of Segment: | G1, G2, G3, G4 |
| Serial Number of Connection Point Sequence Table: | TB(Lₐ) |

In Table 8, the "number of segments" indicates the number of the segments belonging to the loop, and the segments are listed in the row entitled "serial number of segment". The "connection point sequence table" is a data table in which the connection points Q5 and Q6 connecting the loop Lₐ to other loops are listed along the clockwise direction in the segment point sequnece Q1-Q6 existing on the loop Lₐ. The connection point sequence table TB (Lₐ) for the loop Lₐ is indicated in Table 9, and other tables with respect to the other loops L_{b} and L_{c} are also generated.

**Table 9**

| Connection Point Sequence Table for Loop Lₐ | |
|---|---|
| Serial Number of Connection Poit Sequence Table: | TB (Lₐ) |
| Contents of Table: | Q5, Q6 |

A storage area is reserved in the memory 25 for storing the "loop data set" (Fig. 20) including all of the loop data. In the initial stage, no loop has been detected yet, and therefore,$\text{Loop Data Set (in Initial State) = (φ),}$ where the symbol (φ) expresses an empty set.

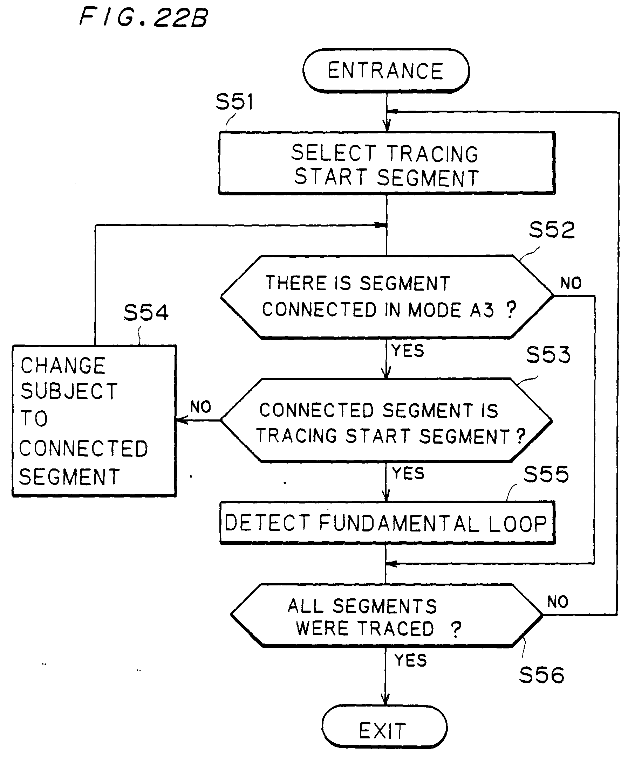

Under the condition where these data are prepared, the CPU 23 starts the process shown in Fig. 22A. In the first process step S50, a fundamental loop (apex interconnecting loop) in which segments are interconnected only in the fundamental connection mode A3 is detected. The detail of the detection step is shown in Fig. 22B, and a tracing start segment at which the tracing is to be started is arbitrary selected from the all segments (the process step S51). Supposing that the segment G5 shown in Fig. 21A is selected, for example, it is judged in the process step S52 whether or not another segment is connected to the segment G5 in the fundamental connection mode A3, with reference to the connection mode data for the segment G5. As seen from Fig. 21A, the segment G6 is connected to the segment G5 in the mode A3, and therefore, the process proceeds to the process step S53 for judging whether or not the segment G6 is the tracing start segment G5. Since the result of the judgement in the process step S52 is "NO", the subject segment is changed to the segment G6 in the process step S54, and then, the process is return to the step S52.

In the process step S52 to which the process is returned, it is found that no segment is connected to the segment G6 in the connection mode A3, where the segment G5 which has been subjected to the process step S52 is omitted in the current judgement in the process step S52. Then, it is also found that the sequence or chain consisting of the segments G5 and G6 cannot form a fundamental loop, and a new tracing step is started after the process returned to the process step S51 through the step S56.

When the segment G1 is selected as the new tracing start segment, the chain of the segments G1-G4 is traced, since these segments G1-G4 are serially interconnected in the connection mode A3. Then, the tracing reaches the tracing start segment G , and the process proceeds to the process step S55, in which it is detected that the set of segments G1-G4 forms the fundamental loop Lₐ. After the detection of the loop Lₐ, information as to the segments G1-G4 is deleted from the connection line data, and the loop data for the loop Lₐ shown in Table 8 is produced. Similar process is conducted on the basis of the connection line data from which the segments G1-G4 were deleted, so that another fundamental loop L_{b} is detected. When the detection of the loops Lₐ and L_{b} is completed, the connection line data is changed to:
(G5, G6, G11, G12), and the loop data set is provided as:${\text{L}}_{\text{a}} {\text{= (G}}_{\text{1}} {\text{, G}}_{\text{2}} {\text{, G}}_{\text{3}} {\text{, G}}_{\text{4}} \text{),}$${\text{L}}_{\text{b}} {\text{= (G}}_{\text{7}} {\text{, G}}_{\text{8}} {\text{, G}}_{\text{9}} {\text{, G}}_{\text{10}} \text{)}$

The segment data G₁, G₂, G₃ and G₄ forming the loop Lₐ are so registered in the memory 25 that the loop Lₐ is specififed as an anticlockwise loop in the Table 8. In other words, the angular direction of the loop should be detected, and, if it is found that the loop was traced in the clockwise direction, the segment data are registered in reverse direction to the tracing direction. The other loop L_{b} is also registered in the same rule to the loop Lₐ. The reason for unifying the respective directions of loops to the anticlockwise direction will be described later.

The detected loops Lₐ and L_{b}, and the remaining segments indicated by the current connection line data are indicated in Fig. 21B.

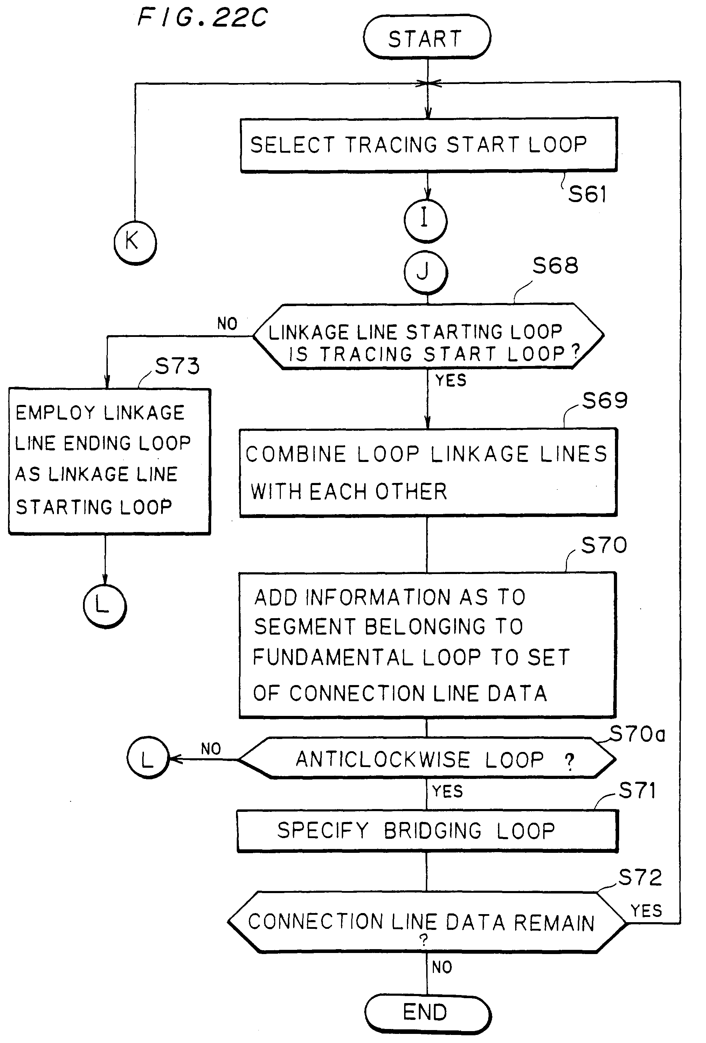

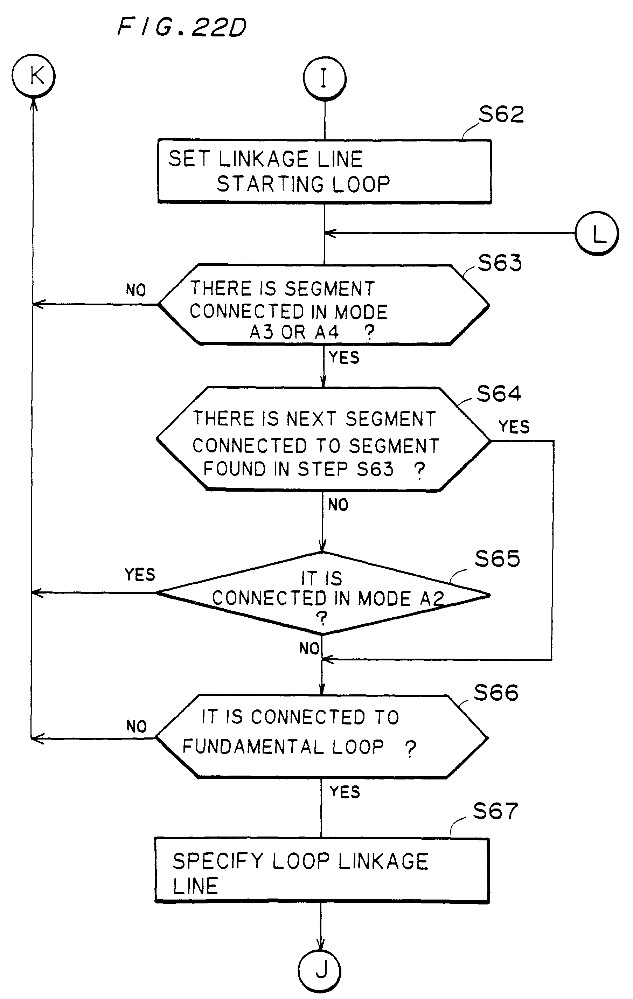

After the detection of the fundamental loops Lₐ and L_{b}, detection of a bridging loop is conducted in the process step S60 (Fig. 22A), the detail of which is illustrated in Fig. 22C and Fig. 22D. In the process step S61, one fundamental loop is arbitrarily selected from the detected fundamental loops Lₐ and L_{b}. Supposing that the loop Lₐ is selected, the loop Lₐ is registered as a "linkage line starting loop" from which a loop linkage line starts to extend toward another fundamental loop, in the process step S62 (Fig. 22D). In the process step S63, it is judged whether or not there is another connected to the linkage line starting loop Lₐ in the connection mode A3 or A4, through a search in the segments remaining in the connection line data. Since the segments G1-G4 have been deleted from the connection line data, they are not subjected to the search.

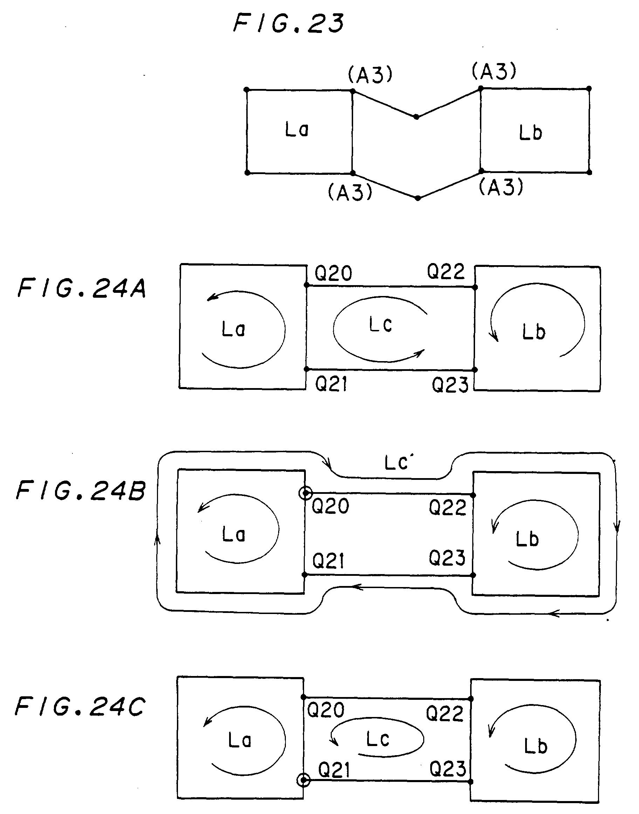

When the segment connected to the loop Lₐ in the mode A3 or A4 is found, the process proceeds to the next process step S64. Fig. 23 shows an example in which two segments are connected to the loop Lₐ in the mode A3. On the other hand, in the example shown in Fig. 21B, two segments G5 and G12 are found to be connected to the loop Lₐ in the mode A4. If two or more segments are found through the search, one of them, e.g., the segment G5, is arbitrarily selected, and then the process proceeds to the process step S64. In the step S64, it is judged whether or not there is another segment connected to the segment G5 in the connection mode A3. As seen from Fig. 21B, the segment G6 is connected to the segment G5 in the mode A3, and therefore, the process further proceeds to the step 66.

Since the segment G6 is connected to the fundamental loop L_{b}, the segments G5 and G6 are registered as a set of segments forming a loop linkage line through the steps S66 and S67.

Incidentally, the step S65 is provided for ignoring a segment in the mode A2, when the result of the judgement in the step 64 is "NO", e.g., it is found that one or more segments are connected to the subjected segment only in the connection mode A4 or A2. This is because the interconnected segments in the connection mode A2 are intercrossed segments shown in Fig. 16A, and it is not necessary to detect the intercrossed segments for the loop linkage line detection. Examples of the intercrossed segments are found in Fig. 3D, and they are the segments f-n at the point p16 and the segments f-g at the point p19. It is to be noted that there are neither segments interconnected in the mode A1 nor those interconnected in the mode A2 without being intercrossed, since they have been corrected to the perfect connection mode through the terminal point correction process already described in the section "D".

After the loop linkage line Cₐ (Fig. 21B) consisting of the segments G5 and G6 is detected, it is judged whether or not the fundamental loop (linkage line ending loop) L_{b} which the loop linkage line Cₐ reaches is the linkage line starting loop Lₐ. Since the loops Lₐ and L_{b} are different loops, the fundamental loop L_{b} is newly set as a linkage line starting loop in the step S73, and the segment chain tracing process described above is repeated. A segment from which the tracing starts is selected from the segments connected to the new starting loop with reference to the connection point sequence table, the detail of which will be described later. Through the repetition process, another loop linkage line C_{b} shown in Fig. 21B is detected, and the process proceeds to the step S69 through the step S68.

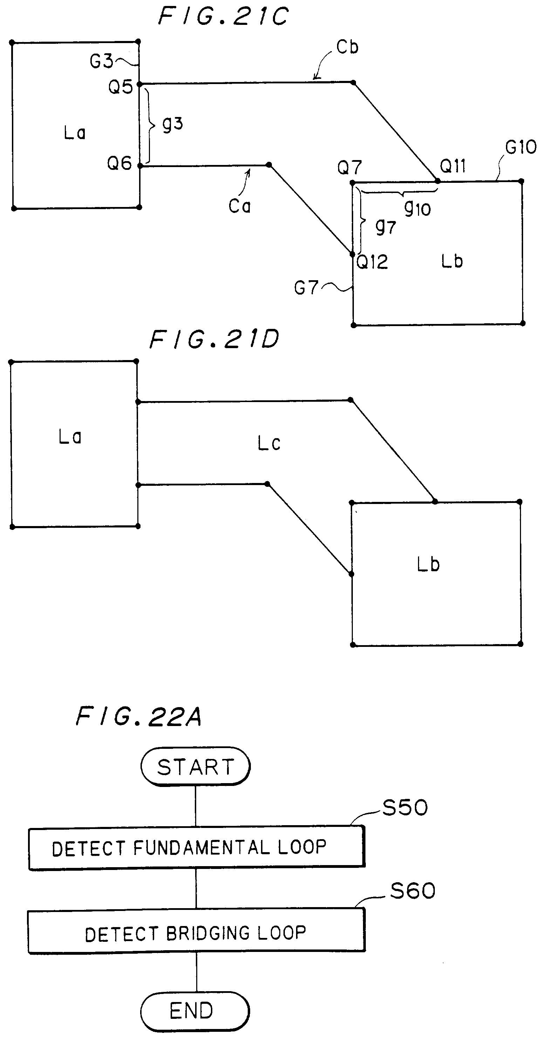

In the step S69, the respective data expressing the loop linkage lines Cₐ and C_{b} are combined. The information expressing the segments G3, G7 and G10 belonging to the fundamental loop Lₐ or L_{b} is added to the data for the loop linkage lines Cₐ and C_{b} in the process step S70, where the information of the segments G3, G7 and G10 are used in the form of an information expressing partial segments g3, g7 and g10 (Fig. 21C) obtained by clipping respective parts of the segments G3, G7 and G10. More particularly, the partial segments g3, g7 and g10 are defined as parts in the sections Q6-Q5, Q7-Q12 and Q11-Q7 respectively, where the points Q5, Q6, Q11 and Q12 are connection points between the fundamental loop Lₐ or L_{b} and the loop linkage line Cₐ or C_{b}. Accordingly, the partial segments have the following start points and end points, respectively:$\text{g3 = start point Q6, end point Q5,}$$\text{g7 = start point Q7, end point Q12,}$$\text{g10 = start point Q11, end point Q7.}$

In the clipping process, the connection point data is referred to. For example, in order to clip the partial segment g3, it is detected which segments in the fundamental loop Lₐ the connection points Q6 and Q5 belong to, respectively, with reference to the connection point data. Then, the respective coordinates of the start and end points of the partial segment g3 are obtained from the coordinates of the points Q6 and Q5.

Then, the angular direction of the loop L_{c} shown in Fig. 21D, which consists of the segments G5, G6, G1 and G12, and the partial segments g3, g7 and g10, is detected. When the loop L_{c} is in clockwise direction, the loop detection is regarded as an error and the process is returned to the step S63 through the step S70a for renewing the loop detection process. On the other hand, if the loop L_{c} is in anticlockwise direction, the loop L_{c} is specified as a bridging loop in the step S71, and loop data for the bridging loop L_{c} is added to the loop data set. The reason for employing only a loop in anticlockwise direction as a bridging loop will be described later. In the example shown in Fig. 21, no segment remains after the bridging loop L_{c} is detected, and therefore, the loop detection process is completed through the process step S72. When the graphic figure to be processed is that shown in Fig. 19E or Fig. 19D rather than that shown in Fig. 19C, the loops Lₚ, L_{q} and Lᵣ are detected as "fundamental loops" and the loop L_{c} is detected as a "bridging loop".

Incidentaly, in the process where a bridging loop is detected after another bridging loop is already detected, the "loop" referred in the steps S61, S70 and S66 means both of a fundamental loop and a bridging loop already detected.

Now, the production rule and the utilization method of the connection point sequence table will be described. A connection point sequence table is produced an stored up every time a new loop is detected. For example, when the loop Lₐ is detected, the connection mode data is investigated to find that the fundamental loop Lₐ is accompanied by the connection points Q5 and Q6. Then, the data expressing the connection points Q5 and Q6 are written in a new connection point sequence table in which the connection points Q5 and Q6 are listed along the clockwise direction in the loop (see Table 9).

In a process of detecting a bridging loop, the connection point sequence table is referred, and a connection point just following the connection point at which the tracing reached the fundamental loop is selected as a next tracing start point. In order to detect a bridging loop without mistaking the angular direction thereof, the respective directions of the detected loops are set at the anticlockwise direction, and the sequence order or direction at which the connection points are registered in the connection point table is set at the clockwise direction. The reason therefor is as follows:

In the example shown in Fig. 24A, when the fundamental loops Lₐ and L_{b} are registered in the anticlockwise direction and the sets of the connection points (Q20, Q21) and (Q22, Q23) belonging to the loops Lₐ and L_{b}, respectively, are registered in the clockwise direction in the connection point sequence table, the bridging loop L_{c} in the anticlockwise direction can be detected by tracing the connection points in the connection point sequence table along the sequence at which the connection points are registered.

In other words, the upward direction from the point Q21 to the point Q20 corresponds to the anticlockwise direction in the loop Lₐ in Fig. 24A, while the downward direction from Q20 to Q21 corresponds to the anticlockwise direction in the loop L_{c}, and therefore, it is required to register the points Q20 and Q21 in the connection point sequence table in the direction opposite to that in the loop data in order to unify the respective directions of the all loops. As will be understood by those skilled in the art, it is allowed that the connection points are registered in the clockwise direction as a loop data while they are registered in the connection point sequence table in the anticlockwise direction, in place of the registering rule indicated above. Namely, either rule may be employed as long as the angular direction of a loop and the sequence or direction of the connection points in the connection point sequence table are opposite to each other.

However, even when such a restriction for the angular direction of a loop and the registering order in the connection point sequence table is employed, an ambiguity in the direction of the bridging loop L_{c} may remain. For example, when the tracing is started from the point Q20 as shown in Fig. 24B, the points Q22, Q23 and Q21 are serially detected in that order, to obtain a clockwise loop L_{c}′. If such a clockwise loop is included in the loop data, the following process for identifying filling regions and unfilling regions will cause errors in some cases. In order to prevent the errors, the direction of the loop just found is detected and, when it is the clockwise direction, the loop is abandoned and another tracing start point Q21 in Fig. 24C is selected to repeat the loop detection process until an anticlockwise loop L_{c} is obtained. This is the reason for providing the step S70a in Fig. 22C. By constructing the connection point sequence table according to the above indicated rule and the connection points therein are traced in the registered sequence, the anticlockwise bridging loop L_{c} can be obtained without an ambiguity in the angular direction thereof. The sequence in the connection point sequence table is interpreted as a cyclical order, and therefore, the connection point following the point Q6 in Table 9 is the point Q5.

Through the loop detection process for the graphic figures shown in Fig. 3D, loops A-F shown in Fig. 3E are detected. Once all of the loops are detected, it is not necessary to distinguish the fundamental loop and the bridging loop, and each of them is referred as a "loop".

### F. Detail of Image Data Generation for Filling

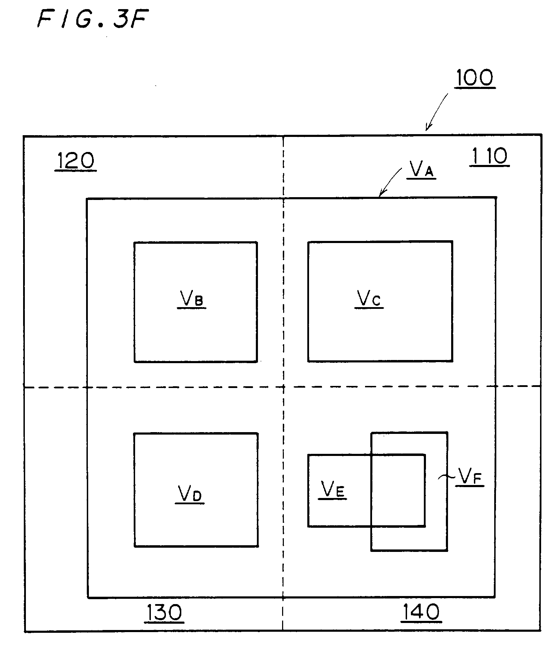

After the loop detection is completed, inclusion relationships between the detected loops are investigated, in which the rectangular approximation and the quadruple branching classification are employed again. Contrarily to the segment classification process already conducted, the margins ΔX₁ and ΔY₁ are set at zero in the present process, since the imperfect connection mode has been already corrected and the loops formed by the segments a-t have perfect shapes. Furthermore, the rectangular approximation is applied to the loops A-F rather than the segments a-t. Therefore, rectangles V_{A}-V_{F} shown in Fig. 3F are obtained from the loops A-F shown in Fig. 3E, through the rectangular approximation.

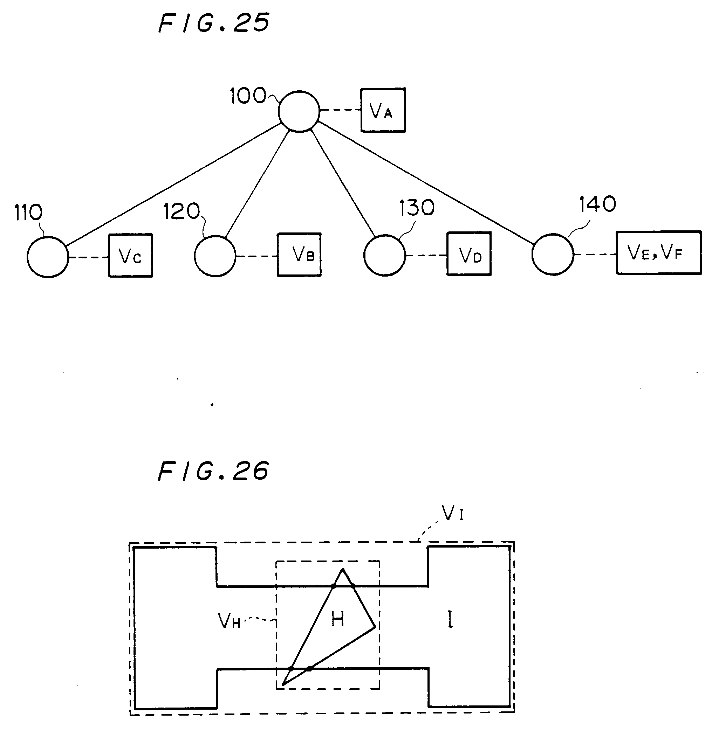

When the rectangles V_{A}-V_{F} are subjected to the quadruple branching classification, a tree shown in Fig. 25 is obtained. The rectangles V_{A}-V_{F} or the loops A-F belong to the whole area 100 of the image plane and the divisional areas 110-140, in the relationship of:${\text{[100] = (V}}_{\text{A}} \text{)}$${\text{[110] = (V}}_{\text{C}} \text{)}$${\text{[120] = (V}}_{\text{B}} \text{)}$${\text{[130] = (V}}_{\text{D}} \text{)}$${\text{[140] = (V}}_{\text{E}} {\text{, V}}_{\text{F}} \text{)}$

After the classification process is completed, the inclusion relationships between the loops A-F are investigated. In the investigation process, the inclusion relationships between the rectangular regions belonging to the higher rank region or node 100 and that belonging to the lower rank regions or nodes 110-140 are investigated as well as the inclusion relationship between the rectangular regions both of which belong to a common node. The inclusion relationships between the regions 110-140 belonging to different branches are not subjected to the investigation, because the lower rank regions 110-140 are relatively exclusive and it can be previously found that the rectangular regions belonging to the nodes, e.g., 110 and 140, classified into the different branches have not an inclusion relationship therebetween.

The investigation may be conducted through a comparison between the respective apex coordinates of the rectangular regions V_{A}-V_{F}. In the example shown in Fig. 3, it is found through the investigation that the rectangular regions V_{B}-V_{F} are included in the rectangular region V_{A}.

Then, the inclusion relationships between the respective loops A-F corresponding to the regions V_{A}-V_{F} are investigated, where the investigation process is conducted only for the loops belonging to the rectangular regions between which an inclusion relationship is found. Therefore, only the respective pairs of loops A-B, A-C, ... and A-F are subjected to the investigation process, in the example shown in Fig. 3E.

More particularly, it is first judged whether or not the subjected loops A and B, for example, cross each other, and then it is further judged whether or not a point arbitrarily selected from points existing on one loop is located in the area surrounded by the other loop when the loops do not cross each other. In the example shown in Fig. 26, a rectangular region V_{H} is included in another rectangular region V_{I}, however, it is found that a loop H is not included in a loop I since the loops H and I cross each other. The detection of a cross may be achieved through the step of judging whether there are the connection modes A2, A4, B5 and/or C3 in the respective connection mode data of the loops H and I. With respect to the example shown in Fig. 3E, it can be found that all of the loops B-F are included in the loop A.

In the next step, regions to be filled with a solid or a tint through an exposure are designated automatically. When the inner region of the most outer loop A is to be filled, the respective inner region of the inner loops B-F are designated as non-filling region. In other words, "filling" and "non-filling" are alternately designated from the higher rank loop to the lower rank loop according to the inclusion order.

The designation is conducted through resetting the respective directions of the segments or vectors a-t forming the loops A-F, i.e., through resetting the respective start and end points of the segments or vectors a-t within the respective terminal points thereof. When the filling rule is previously so determined that the left hand side region of a segment with respect to the direction of the segment is to be filled while the right hand side region thereof is not to be filled, the respective directions of the segments a-t (Fig. 3G) are so reset that the loop A is an anticlockwise loop and the other loops B-F are clockwise loops. The region W shown in Fig. 3G exists in the respective left hand side with respect to the loops A-F, and it can be detected in the following recording process that the region W is a "filling region" rather than a "non-filling region". The inversion of a segment direction is achieved by exchanging the start and end points of the segment, and the resets of the respective directions of the segments are carried out in the segment data. In other words, information indicating the positional relationship between the segment and the filling region is given to the segment data through resetting the respective coordinates of the start and end points of the segments.

Since the rectangular approximation and the quadruple branching classification method are employed in the detection of the inclusion relationships between the loops, the detection efficiency is further improved in the preferred embodiment.

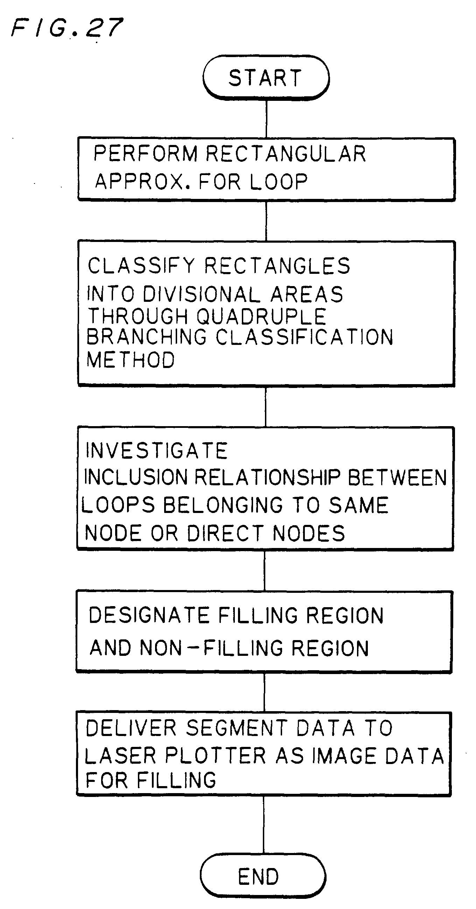

The segment data after being subjected to the above indicated processing are delivered from the image data converter 20 to the laser plotter 30 as image data for filling the inner or outer regions of the graphic figures. The delivery of the image data may be attached through either on-lin communication or off-line communication. The process described above is also indicated in Fig. 27.

### G. Detail of the Operation in the Laser Plotter 30

The segment data corresponding to the graphic figures shown in Fig. 3G are delivered to the raster converter 31 in the laser plotter 30. The raster convertor 31 calculates the respective coordinates of the points (e.g., the points u₁-u₆ in Fig. 3H) at which a main scanning line SL crosses the segments forming the loops A-F. Although only one main scanning line is illustrated in Fig. 3H, there are many main scanning lines parallel to each other, and the process is carried out with respect to each of the main scanning lines. From the coordinates thus obtained, run-lengths ℓ₁-ℓ₇ in the image plane 100 are calculated. For example, the run-length ℓ₂ is obtained as ℓ₂ =u₁ - u₂.

The interface circuit 32 controls the laser beam supplied from laser oscillator 33 to the photosensitive material 34 on the basis of the run-length data ℓ₁-ℓ₇ so that the laser beam is continuosly activated in the period in which the main scanning sweeps the interval ℓ₁, and then continuously inactivated in the next period in which the main scanning sweeps the interval ℓ₂. Similar operation is performed with respect to the intervals ℓ₃-ℓ₇, too. The judgement whether the laser beam is to be turned-on or turned-off when the scanning crosses a segment is carried out through a comparison between the respective subscanning coordinates of the start and end points of the segment. If the subscanning coordinate of the start point is smaller than that of the end point, the vector expressing the segment is directed downward in the image plane 100. Therefore, the main scanning started at the left side of the image plane 100 runs from the right hand side of the segment to the left hand side thereof with respect to the direction of the segment, i.e., the downward direction, and the laser beam is turned-on when the main scanning crosses the segment. On the other hand, if the subscanning coordinate of the start point is larger than that of the end point, i.e., the vector expressing the segment is directed upward, the laser beam is turned-off when the main scanning crosses the segment.

Furthermore, when the main scanning successively crosses two segments both of which are directed downward, a designation for turn-off is twice given, whereby the laser beam is continuously inactivated until a designation for turn-on is twice given.

Through the operation where the above indicated process is carried out while scanning the photosensitive film 34 with the laser beam, whereby regions on the photosensitive film 34 corresponding to the hatched parts in Fig. 3H are filled with the exposure, to obtain a desired record image.

### H. Modifications

The segment data may be prepared in an apparatus other than the CAD system, and the image data converter according to the present invention can be applied to several systems in which image data expressed by a set of segment data is converted to other type image data for recording scan. The image in which a desired region thereof is filled with an image filler such as a solid color or a tint may be recorded on a medium or displayed on a CRT. The present invention can be also applied to a dot image recorder.

In the present invention, since the connection mode data are generated on the basis of the connection relationships between the respective terminal points of the segments and the terminal point correction is conducted in response to the connection mode data, the image data required for automatically filling the inner or outer region of the graphic figure can be obtained at a high speed and at a high efficiency even if the segment data are imperfectly prepared.

The features disclosed in the foregoing description, in the claims and/or in the accompanying drawings may, both separately and in any combination thereof, be material for realising the invention in diverse forms thereof.

## Claims

1. A method of converting first vector data expressing vectors expressing a contour of a graphic figure into raster image data for filling an inner region or an outer region of said graphic figure for each scanning line, wherein said first vector data includes respective coordinates of terminal points of each vector on an image plane,
characterized in that
said method comprises the steps of
(a) comparing respective coordinates of said terminal points (aS, aE, bS, bE, ...) of respective vectors each other to determine whether or not each vector has a floating terminal point not located on terminal points of other vectors,
(b) extracting imperfect-connection ve tors from said vectors, wherein said imperfect-connection vectors are defined as vectors having floating terminal points,
(c) moving said floating terminal points of said imperfect-connection vectors to terminal points of other ones of said vectors to obtain second vector data including only vectors having no floating terminal points,
(d) detecting a plurality of loops (La, Lb, Lc, ...) formed by said vectors having no floating terminal points, and
(e) obtaining said raster image data for filling the inner or outer region of said graphic figure with an image filler for each scanning line, comprising the steps of
(e-1) finding mutual inclusion relationship among said plurality of loops,
(e-2) resetting the directions of said vectors such that a clockwise loop and an anticlockwise loop appear alternately in an inclusion order of the loops and respective regions to be filled are located on a designated side of each vector, and
(e-3) determining run-length between cross points of respective loops and each scanning line to generate said raster image data.

2. The method of claim 1,
characterized in that
the step (a) comprises the steps of
(a-1) specifying rectangles surrounding said segments, respectively, in an image plane on which said graphic figure is defined,
(a-2) extracting interrelated rectangles from said rectangles, where said interrelated rectangles are defined as rectangles belonging to areas overlapped with each other on said image plane, respectively, and
(a-3) comparing the terminal points of the vectors surrounded by said interrelated rectangles with each other to determine whether or not each vector has a floating terminal point.

3. The method of claim 2,
characterized in that
the step (a-2) comprises the steps of
(a-21) dividing said image plane repeatedly, thereby to obtain a tree of divisional areas in which each of said divisional areas is related to a node of said tree according to a sequence of division,
(a-22) comparing each of said rectangles with said divisional areas, thereby to find respective minimum divisional areas including said rectangles, respectively, and
(a-23) detecting said interrelated rectangles within rectangles whose respective minimum divisional areas belong to a same node or direct nodes in said tree.

4. The method of claim 3,
characterized in that
said rectangles are so defined as to surround said segments with a predetermined margin, respectively.

5. The method of claim 4,
characterized in that
said raster image data is delivered to an image recorder in which said inner region or said outer region of said loop is filled for each scanning line, and
each of said rectangles has two pairs of opposite sides being parallel to a main scanning direction and a subscanning direction in said image recorder, respectively.

6. The method of claim 5,
characterized in that
the step (b) comprises the steps of
(b-1) generating connection mode data for discriminating said imperfect-connection vectors from other vector data having no floating terminal points, and
(b-2) storing said connection mode data in a memory as a data base.

7. The method of any of the preceding claims,
characterized in that
said connection modes are previously classified into a perfect connection mode and an imperfect connection mode, where said perfect connection mode is defined as a mode in which a terminal point of a segment exists on another segment and said imperfect connection mode is defined as a mode other than said perfect connection mode.

8. The method of claim 1,
characterized in that
the step (d) comprises the steps of
(d-1) detecting one or more fundamental loops in which segments are serially connected only in a fundamental connection mode, said fundamental connection mode being defined as a mode where a terminal point of a segment exists at a terminal point of another segment, and
(d-2) detecting one or more bridging loops formed by bridging between already detected loops with a segment, and
said plurality of loops are obtained by both of said fundamental loops and said bridging loops.

9. The method of claim 8,
characterized in that
the step (d) further comprises the steps of
(d-3) generating a connection point sequence table every time a loop is detected, where said connection point table has an information as to a sequence of connection points existing on said loop, and said connection points are points at which said loops is connected to segments other than segments forming said loops, and
the step (d-2) has the steps of
(d-21) tracing a chain of segments from a first loop already detected,
(d-22) referring said connection point sequence table when a tracing of the step (d-21) reaches a second loop already detected, to select one connection point in said connection point sequence table according to a rule where, along said sequence, said one connection point follows a connection point at which said tracing reaches said second loop, and
(d-23) resuming a tracing of a segment chain from said connection point selected in the step (d-22).

10. The method of claim 9,
characterized in that
said vector data is prepared as data which can be also used in a cutting machine employed for cutting a peel-off film in response to said vector data.

11. An image data converter for converting first vector data expressing vectors expressing a contour of a graphic figure into raster image data for filling an inner region or an outer region of said graphic figure for each scanning line, wherein said first vector data includes respective coordinates of terminal points of each vector on an image plane,
characterized by
(a) means for comparing respective coordinates of said terminal points (aS, aE, bS, bE, ...) of respective vectors each other to determine whether or not each vector has a floating terminal point not located on terminal points of other vectors,
(b) means for extracting imperfect-connection vectors from said vectors, wherein said imperfect-connection vectors are defined as vectors having floating terminal points,
(c) means for moving said floating terminal points of said imperfect-connection vectors to terminal points of other ones of said vectors to obtain second vector data including only vectors having no floating terminal points,
(d) means for detecting a plurality of loops (La, Lb, Lc, ...) formed by said vectors having no floating terminal points, and
(e) means for obtaining said raster image data for filling the inner or outer region of said graphic figure with an image filler for each scanning line, comprising
(e-1) means for finding mutual inclusion relationship among said plurality of loops,
(e-2) means for resetting the directions of said vectors such that a clockwise loop and an anticlockwise loop appear alternately in an inclusion order of the loops and respective regions to be filled are located on a designated side of each vector, and
(e-3) means for determining run-length between cross points of respective loops and each scanning line to generate said raster image data.

12. The apparatus of claim 11,
characterized in that
said means (a) comprises means for
(a-1) specifying rectangles surrounding said segments, respectively, in an image plane on which said graphic figure is defined,
(a-2) extracting interrelated rectangles from said rectangles, where said interrelated rectangles are defined as rectangles belonging to areas overlapped with each other on said image plane, respectively, and
(a-3) comparing the terminal points of the vectors surrounded by said interrelated rectangles with each other to determine whether or not each vector has a floating terminal point.
13. The apparatus of claim 12,
characterized by
means for preparing said vector data as data which can be also used in a cutting machine employed for cutting a peel-off film in response to said vector data.

## Patentansprüche

1. Verfahren zum Umwandeln erster Vektordaten, die Vektoren ausdrücken, welche eine Kontur einer grafischen Figur ausdrücken, in Rasterbilddaten zum Auffüllen eines Innenbereiches oder eines Außenbereiches der grafischen Figur für jede Abtastzeile, wobei die ersten Vektordaten jeweilige Koordinaten von Endpunkten jedes Vektors auf einer Bildebene umfassen,
dadurch gekennzeichnet, daß
das Verfahren die Schritte
(a) Vergleichen jeweiliger Koordinaten der Endpunkte (aS, aE, bS, bE ...) jeweiliger Vektoren miteinander, um zu bestimmen, ob jeder Vektor einen schwimmenden Endpunkt hat, der nicht auf Endpunkten anderer Vektoren liegt, hat oder nicht,
(b) Herausziehen von Vektoren mit nicht perfekter Verbindung aus den Vektoren, wobei die Vektoren mit nicht perfekter Verbindung als Vektoren mit schwimmenden Endpunkten definiert werden,
(c) Bewegen der schwimmenden Endpunkte der Vektoren mit nicht perfekter Verbindung zu Endpunkten anderer der Vektoren, um zweite Vektordaten zu erhalten, die nur Vektoren einschließen, die keine schwimmenden Endpunkte haben,
(d) Erfassen einer Vielzahl von Schleifen (La, Lb, Lc ...), die von den Vektoren ohne schwimmende Endpunkte gebildet werden, und
(e) Erhalten der Rasterbilddaten zum Ausfüllen des Innen- oder Außenbereichs der grafischen Figur mit einem Bildfüller für jede Abtastzeile, mit den Schritten
(e-1) Auffinden wechselseitiger Einschlußbeziehungen unter der Vielzahl der Schleifen,
(e-2) Neusetzen der Richtungen der Vektoren derart, daß eine Schleife im Uhrzeigersinn und eine Schleife im Gegenuhrzeigersinn abwechselnd in einer Einschlußanordnung der Schleifen erscheinen und jeweilige Bereiche, die gefüllt werden sollen, auf einer bezeichneten Seite jedes Vektors angeordnet sind, und
(e-3) Bestimmen von Lauflängen zwischen Kreuzungspunkten jeweiliger Schleifen und jeder Abtastlinie, um die Rasterbilddaten zu erzeugen,
aufweist.

2. Verfahren nach Anspruch 1,
dadurch gekennzeichnet, daß
der Schritt (a) die Schritte
(a-1) Festlegen von Rechtecken, die jeweils die Segmente umgeben, in einer Bildebene, auf der die grafische Figur definiert ist,
(a-2) Herausziehen von miteinander in Beziehung stehenden Rechtecken aus den Rechtecken, wobei die miteinander in Beziehung stehenden Rechtecke als Rechtecke definiert sind, die zu Flächen gehören, die einander auf der Bildebene jeweils überlappen, und
(a-3) Vergleichen der Endpunkte der Vektoren, die von den miteinander in Beziehung stehenden Rechtecken umgeben sind, miteinander, um zu bestimmen, ob jeder Vektor einen schwimmenden Endpunkt hat oder nicht,
aufweist.

3. Verfahren nach Anspruch 2,
dadurch gekennzeichnet, daß
der Schritt (a-2) die Schritte
(a-21) wiederholtes Aufteilen der Bildebene, um somit einen Baum von Teilflächen zu erhalten, in dem jede der Teilflächen zu einem Knoten des Baums entsprechend einer Abfolge der Aufteilung in Beziehung steht,
(a-22) Vergleichen jedes der Rechtecke mit den Teilflächen, um somit jeweilige minimale Teilflächen zu finden, die die Rechtecke jeweils einschließen, und
(a-23) Erfassen der miteinander in Beziehung stehenden Rechtecke innerhalb der Rechtecke, deren jeweilige minimale Teilflächen zu einem identischen Knoten oder direkten Knoten in dem Baum gehören,
aufweist.

4. Verfahren nach Anspruch 3,
dadurch gekennzeichnet, daß
die Rechtecke so definiert sind, daß sie die Segmente mit einem vorbestimmten Rand jeweils umgeben.

5. Verfahren nach Anspruch 4,
dadurch gekennzeichnet, daß
die Rasterbilddaten an eine Bildaufzeichnungseinrichtung geliefert werden, in der der Innenbereich oder der Außenbereich der Schleife für jede Abtastlinie aufgefüllt wird, und
jedes der Rechtecke zwei Paare von gegenüberliegenden Seiten hat, die jeweils parallel zu einer Hauptabtastrichtung und einer nachrangigen Abtastrichtung in der Bildaufzeichnungseinrichtung sind.

6. Verfahren nach Anspruch 5,
dadurch gekennzeichnet, daß
der Schritt (b) die Schritte
(b-1) Erzeugen von Verbindungsmodusdaten zum Unterscheiden der Vektoren mit nicht perfekter Verbindung von anderen Vektordaten ohne schwimmende Endpunkte und
(b-2) Speichern der Verbindungsmodusdaten in einem Speicher als eine Datenbasis,
aufweist.

7. Verfahren nach einem der vorangehenden Ansprüche,
dadurch gekennzeichnet, daß
die Verbindungsmodi zuvor in einen perfekten Verbindungsmodus und einen nicht perfekten Verbindungsmodus klassifiziert werden, wobei der perfekte Verbindungsmodus als ein Modus definiert ist, bei dem ein Endpunkt eines Segmentes auf einem anderen Segment vorliegt, und der nicht perfekte Verbindungsmodus als ein Modus unterschiedlich von dem perfekten Verbindungsmodus definiert ist.

8. Verfahren nach Anspruch 1,
dadurch gekennzeichnet, daß
der Schritt (d) die Schritte
(d-1) Erfassen einer oder mehrerer fundamentaler Schleifen, in denen Segmente seriell nur in einem fundmentalen Verbindungsmodus verbunden sind, wobei der fundamentale Verbindungsmodus als ein Modus definiert ist, bei dem ein Endpunkt eines Segments an einem Endpunkt eines weiteren Segments vorliegt, und
(d-2) Erfassen einer oder mehrerer überbrückender Schleifen, die gebildet werden, indem eine Brücke zwischen bereits erfaßten Schleifen mit einem Segment gebildet wird, aufweist und
die Vielzahl von Schleifen durch sowohl die fundamentalen Schleifen und die überbrückenden Schleifen erhalten wird.

9. Verfahren nach Anspruch 8,
dadurch gekennzeichnet, daß
der Schritt (d) weiter die Schritte
(d-3) Erzeugen einer Verbindungspunkt-Sequenztabelle jedesmal dann, wenn eine Schleife erfaßt wird, wobei die Verbindungspunkttabelle eine Information hinsichtlich einer Abfolge von Verbindungspunkten, die auf der Schleife vorliegen, hat, und die Verbindungspunkte Punkte sind, an denen die Schleife mit anderen Segmenten als den Segmenten, die die Schleifen bilden, verbunden ist,
aufweist, und
der Schritt (d-2) die Schritte
(d-21) Verfolgen einer Kette von Segmenten von einer ersten bereits erfaßten Schleife aus,
(d-22) Bezugnahme auf die Verbindungspunkt-Sequenztabelle, wenn ein Verfolgen des Schrittes (d-21) eine zweite Schleife erreicht, die bereits erfaßt worden ist, um einen Verbindungspunkt in der Verbindungspunkt-Sequenztabelle gemäß einer Regel auszuwählen, bei der entlang einer Abfolge der eine Verbindungspunkt einem Verbindungspunkt folgt, bei dem die Verfolgung eine zweite Schleife erreicht, und
(d-23) Wiederaufnahme eines Verfolgens einer Segmentkette von dem Verbindungspunkt, der in dem Schritt (d-22) ausgewählt ist,
hat.

10. Verfahren nach Anspruch 9,
dadurch gekennzeichnet, daß
die Vektordaten als Daten vorbereitet werden, die auch bei einer Schneidmaschine verwendet werden können, die zum Schneiden eines Abziehfilms abhängig von den Vektordaten verwendet wird.

11. Bilddatenwandler zum Umwandeln erster Vektordaten, die
Vektoren ausdrücken, welche eine Kontur einer grafischen Figur ausdrücken, in Rasterbilddaten zum Auffüllen eines Innenbereiches oder eines Außenbereiches der grafischen Figur für jede Abtastlinie, wobei die ersten Vektordaten jeweils Koordinaten von Endpunkten jedes Vektors auf einer Bildebene umfassen,
gekennzeichnet durch
(a) eine Einrichtung zum Vergleichen jeweiliger Koordinaten von den Endpunkten (aS, aE, bS, bE ...) jeweiliger Vektoren miteinander, um zu bestimmen, ob jeder Vektor einen schwimmenden Endpunkt hat, der nicht auf Endpunkten anderer Vektoren liegt, oder nicht,
(b) eine Einrichtung zum Herausziehen von Vektoren mit nicht perfekter Verbindung aus den Vektoren, wobei die Vektoren mit nicht perfekter Verbindung als Vektoren definiert sind, die schwimmende Endpunkte haben,
(c) eine Einrichtung zum Bewegen der schwimmenden Endpunkte der Vektoren mit nicht perfekter Verbindung auf Endpunkte anderer der Vektoren, um zweite Vektordaten zu erhalten, die nur solche Vektoren einschließen, die keine schwimmenden Endpunkte haben,
(d) eine Einrichtung zum Erfassen einer Vielzahl von Schleifen (La, Lb, Lc ...), die durch die Vektoren gebildet werden, welche keine schwimmenden Endpunkte haben, und
(e) eine Einrichtung zum Erhalten der Rasterbilddaten zum Ausfüllen des Innen- oder Außenbereichs der grafischen Figur mit einem Bildfüller für jede Abtastzeile, mit
(e-1) einer Einrichtung zum Auffinden einer wechselseitigen Einschlußbeziehung unter der Vielzahl von Schleifen,
(e-2) einer Einrichtung zum Neusetzen der Richtungen der Vektoren, so daß eine Schleife im Uhrzeigersinn und eine Schleife im Gegenuhrzeigersinn abwechselnd in einer Einschlußreihenfolge der Schleifen erscheint und jeweilige Bereiche, die gefüllt werden sollen, auf einer bezeichneten Seite jedes Vektors angeordnet sind, und
(e-3) einer Einrichtung zum Bestimmen der Lauflänge zwischen Kreuzungspunkten jeweiliger Schleifen und jeder Abtastzeile, um Rasterbilddaten zu erzeugen.

12. Vorrichtung nach Anspruch 11,
dadurch gekennzeichnet, daß die Einrichtung (a) Einrichtungen zum
(a-1) Festlegen von Rechtecken, die jeweils die Segmente umgeben, in einer Bildebene, auf der die grafische Figur definiert ist,
(a-2) Herausziehen von miteinander in Beziehung stehenden Rechtecken aus den Rechtecken, wobei die miteinander in Beziehung stehenden Rechtecke als Rechtecke definiert sind, die zu Flächen gehören, die einander auf der Bildebene jeweils überlappen, und
(a-3) Vergleichen der Endpunkte der Vektoren, die von den miteinander in Beziehung stehenden Rechtecken umgeben sind, miteinander, um zu bestimmen, ob jeder Vektor einen schwimmenden Endpunkt hat oder nicht,
aufweist.

13. Vorrichtung nach Anspruch 12,
gekennzeichnet durch
eine Einrichtung zum Vorbereiten der Vektordaten als Daten, die auch bei einer Schneidmaschine benutzt werden können, die zum Schneiden eines Abziehfilms abhängig von den Vektordaten benutzt wird.

## Revendications

1. Procédé de conversion de premières données de vecteur exprimant des vecteurs exprimant le profil d'une figure graphique en données d'image en réseau pour remplir une région intérieure ou une région extérieure de ladite figure graphique pour chaque ligne de balayage, dans lequel lesdites premières données de vecteur comprennent les coordonnées correspondantes des points terminaux de chaque vecteur sur un plan d'image,
caractérisé en ce que
ledit procédé comprend les étapes :
(a) de comparaison les unes avec les autres des cordonnées correspondantes desdits points terminaux (aS, aE, bS, bE, ...) des vecteurs correspondants pour déterminer si chaque vecteur comporte ou non un point terminal flottant qui n'est pas situé sur les points terminaux d'autres vecteurs,
(b) d'extraction des vecteurs à liaison imparfaite desdits vecteurs, dans laquelle lesdits vecteurs à liaison imparfaite sont définis comme des vecteurs comportant des points terminaux flottants,
(c) de déplacement desdits points terminaux flottants desdits vecteurs à liaison imparfaite jusqu'aux points terminaux desdits autres vecteurs pour obtenir des secondes données de vecteur comprenant uniquement des vecteurs ne comportant pas de points terminaux flottants,
(d) de détection d'une pluralité de boucles (La, Lb, Lc, ...) formées par lesdits vecteurs ne comportant pas de points terminaux flottants, et
(e) d'obtention desdites données d'image en réseau pour remplir la région intérieure ou extérieure de ladite figure de graphique grâce à une matière de remplissage d'image pour chaque ligne de balayage, comprenant les étapes de
(e-1) trouver la relation réciproque d'inclusion parmi ladite pluralité de boucles,
(e-2) remettre à zéro les directions desdits vecteurs de telle façon qu'une boucle dans le sens des aiguilles d'une montre et qu'une boucle dans le sens inverse des aiguilles d'une montre apparaissent alternativement dans l'ordre d'inclusion des boucles et que les zones correspondantes devant être remplies soient situées sur un côté désigné dudit vecteur, et
(e-3) déterminer la longueur de projection entre les points de croisement des boucles correspondantes et chaque ligne de balayage pour créer lesdites données d'image en réseau.

2. Procédé selon la revendication 1,
caractérisé en ce que
l'étape (a) comprend les étapes de
(a-1) spécifier respectivement les rectangles entourant lesdits segments dans un plan d'image sur lequel ladite figure de graphique est définie,
(a-2) extraire les rectangles en corrélation desdits rectangles, où lesdits rectangles en corrélation sont définis comme des rectangles appartenant respectivement aux zones qui se chevauchent l'une l'autre, et
(a-3) comparer les points terminaux des vecteurs entourés par lesdits rectangles en corrélation les uns avec les autres pour déterminer si oui ou non chaque vecteur comporte un point terminal flottant.

3. Procédé selon la revendication 2,
caractérisé en ce que
l'étape (a-2) comprend les étapes de
(a-21) diviser de manière répétée ledit plan d'image, pour obtenir par ce moyen un arbre de zone divisées dans lequel chacune desdites zones divisées est relative à un noeud dudit arbre selon une séquence de division,
(a-22) comparer chacun desdits rectangles avec lesdites zones divisées, pour trouver par ce moyen les zones divisées minimales correspondantes comprenant respectivement lesdits rectangles, et
(a-23) détecter lesdits rectangles en corrélation à l'intérieur des rectangles dont les zones divisées minimales correspondantes appartiennent à un même noeud ou à des noeuds directs dudit arbre.

4. Procédé selon la revendication 3,
caractérisé en ce que
lesdits rectangles sont définis de manière à entourer respectivement lesdits segments avec une marge prédéterminée.

5. Procédé selon la revendication 4,
caractérisé en ce que
lesdites données d'image en réseau sont fournies à un dispositif d'enregistrement d'image dans lequel ladite région intérieure ou ladite région extérieure de ladite boucle est remplie pour chaque ligne de balayage, et
chacun des deux rectangles comporte deux paires de côté opposés qui sont parallèles respectivement à une direction principale de balayage et à une direction de balayage secondaire dans ledit dispositif d'enregistrement d'image.

6. Procédé selon la revendication 5,
caractérisé en ce que
l'étape (b) comprend une étape de
(b-1) créer les données de mode de liaison pour établir la discrimination desdits vecteurs à liaison imparfaite à partir des autres données de vecteur ne comportant pas de points terminaux flottants, et
(b-2) stocker lesdites données de mode de liaison dans une mémoire en tant que base de données.

7. Procédé selon l'une quelconque des revendications précédentes,
caractérisé en ce que
lesdits modes de liaison sont classés auparavant dans un mode de liaison parfaite et dans un mode de liaison imparfait, où ledit mode de liaison parfait est défini comme un mode dans lequel un point terminal d'un segment existe sur un autre segment et où ledit mode de liaison imparfait est défini comme un mode autre que ledit mode de liaison parfait.

8. Procédé selon la revendication 1,
caractérisé en ce que
l'étape (d) comprend les étapes de
(d-1) détecter une ou plusieurs boucles fondamentales dans lesquelles les segments sont reliés uniquement en série suivant un mode de liaison fondamental, ledit mode de liaison fondamental étant défini comme un mode où un point terminal d'un segment existe au niveau du point terminal d'un autre segment, et
(d-2) détecter une ou plusieurs boucles de pontage formées par le pontage entre les boucles déjà détectées avec un segment, et
lesdites pluralités de boucles sont obtenues à la fois par lesdites boucles fondamentales et par lesdites boucles de pontage.

9. Procédé selon la revendication 8,
caractérisé en ce que
l'étape (d) comprend en outre les étapes de
(d-3) créer une table de séquence de point de liaison chaque fois qu'une boucle est détectée, où ladite table de point de liaison comporte une information telle qu'une séquence de point de liaison existant sur ladite boucle, et où lesdits points de liaison sont des points au niveau desquels lesdites boucles sont reliées à des segments autres que les segments formant lesdites boucles, et
l'étape (d-2) comporte les étapes de
(d-21) tracer une chaîne de segment à partir d'une première boucle déjà détectée,
(d-22) se référer à ladite table de séquence de point de liaison lorsqu'un tracé de l'étape (d-21) atteint une seconde boucle déjà détectée, pour sélectionner un point de liaison dans ladite table de séquence de point de liaison selon une règle où, au long de ladite séquence, ledit point de liaison suit un point de liaison au niveau duquel ledit tracé atteint ladite seconde boucle, et
(d-23) continuer le tracé d'une chaîne de segments à partir dudit point de liaison sélectionné durant l'étape (d-22).

10. Procédé selon la revendication 9,
caractérisé en ce que
lesdites données de vecteur sont préparées comme des données qui peuvent être utilisées également dans une machine de découpe utilisée pour couper un film détaché en réponse auxdites données de vecteur.

11. Convertisseur de données d'image pour convertir les premiers vecteurs exprimant des données de vecteur qui expriment le profil d'une figure graphique hors des données d'image en réseau pour remplir une région intérieure ou une région extérieure de ladite figure graphique pour chaque ligne de balayage, dans lequel lesdites premières données de vecteur comprennent les coordonnées correspondantes des points terminaux de chaque vecteur sur un plan d'image,
caractérisé par
(a) des moyens pour comparer les unes avec les autres les coordonnées correspondantes desdits points terminaux (aS, aE, bS, bE, ...) des vecteurs correspondants pour déterminer si oui ou non chaque vecteur comporte un point terminal flottant qui n'est pas situé sur des points terminaux d'autres vecteurs,
(b) des moyens pour extraire desdits vecteurs les vecteurs à liaison imparfaite, dans lesquels lesdits vecteurs à liaison imparfaite sont définis comme des vecteurs comportant des points terminaux flottants,
(c) des moyens pour déplacer lesdits points terminaux flottants desdits vecteurs à liaison imparfaite jusqu'aux points terminaux desdits autres vecteurs pour obtenir des secondes données de vecteur comprenant uniquement les vecteurs ne comportant pas de points terminaux flottants,
(d) des moyens pour détecter une pluralité de boucles (La, Lb, Lc, ...) formées par lesdits vecteurs ne comportant pas de points terminaux flottants, et
(e) des moyens pour obtenir lesdites données d'image en réseau pour remplir la région intérieure ou extérieure de ladite figure graphique avec une matière de remplissage d'image pour chaque ligne de balayage, comprenant
(e-1) des moyens pour trouver la relation réciproque d'inclusion parmi ladite pluralité de boucles,
(e-2) des moyens pour remettre à zéro les directions desdits vecteurs de telle façon qu'une boucle dans le sens des aiguilles d'une montre et qu'une boucle dans le sens inverse des aiguilles d'une montre apparaissent alternativement dans l'ordre d'inclusion des boucles et que les régions correspondantes devant être remplies sont situées sur un côté désigné de chaque vecteur, et
(e-3) des moyens pour déterminer la longueur de projection entre les points de croisement des boucles correspondantes et de chaque ligne de balayage pour créer lesdites données d'image en réseau.

12. Dispositif selon la revendication 11,
caractérisé en ce que
lesdits moyens (a) comprennent des moyens pour
(a-1) déterminer les rectangles entourant respectivement lesdits segments dans un plan d'image sur lequel est définie la figure graphique,
(a-2) extraire desdits rectangles les rectangles en corrélation, où lesdits rectangles en corrélation sont définis comme des rectangles appartenant respectivement aux zones qui se chevauchent l'une l'autre sur ledit plan d'image, et
(a-3) comparer les points terminaux des vecteurs entourés par lesdits rectangles en corrélation avec chacun des autres pour déterminer si oui ou non chaque vecteur comporte un point terminal flottant.

13. Dispositif selon la revendication 12,
caractérisé par
des moyens pour préparer lesdites données de vecteur en tant que données qui peuvent être également utilisées dans une machine de découpe utilisée pour découper un film détaché en réponse auxdites données de vecteur.
